# FASCICULE DE BREVET EUROPEEN

(11) **EP 2 404 085 B1**
(45) Date de publication et mention de la délivrance du brevet: **10.05.2017**
(21) Numéro de dépôt: 10715304.1
(22) Date de dépôt: 05.03.2010
(51) Int. Cl.: F16J 13/06

(54) **AS PUBLISHED**
AS PUBLISHED
AS PUBLISHED

(30) Priorité: 06.03.2009 FR 0951430
(43) Date de publication de la demande: 11.01.2012
(73) Titulaire: SARTORIUS STEDIM FMT SAS, 13400 Aubagne (FR)
(72) Inventeur: BERNARD, Frédéric, F-83740 La Cadiere d'Azur (FR); CHEVALIER, Eric, F-75015 Paris (FR)
(74) Mandataire: Derambure, Christian
(86) Numéro de dépôt international: PCT/FR2010/050383
(87) Numéro de publication internationale: WO 2010/100388

(56) Documents cités:
- WO-A-97/18994
- FR-A- 2 379 450
- GB-A- 2 175 966
- US-A- 2 690 854

## Description

L'invention est relative aux montages à enceinte torique de maintien sur une collerette annulaire, de manière fixe, amovible et étanche, à mise en place et enlèvement rapides, spécialement destinés au domaine biopharmaceutique. De tels montages visent soit l'obturation de l'ouverture d'extrémité formée par la collerette rigide soit le raccordement - avec communication - sur cette collerette.

On sait qu'il existe dans le domaine biopharmaceutique le besoin de pouvoir monter - à savoir obturer ou raccorder avec communication - de manière fixe, amovible et étanche, des pièces telles que des - ou plus précisément des parties de - récipients, tubes ou ports intégrés à des ensembles plus ou moins complexes pouvant comprendre plusieurs récipients, plusieurs tubes, plusieurs moyens fonctionnels, associés les uns avec les autres.

Pour la simplicité de l'exposé, on convient de dénommer les deux pièces qui sont ainsi à monter ou sont ainsi montées, « première pièce » et « deuxième pièce ». On convient en outre que le montage, également désigné par assemblage, a pour objet soit l'obturation soit le raccordement avec communication, et qu'en conséquence monter, ou assembler, s'entend soit d'obturer soit de raccorder avec communication.

De façon traditionnelle, de tels récipients à usage biopharmaceutique étaient réalisés en acier inoxydable et raccordés à un ou plusieurs tubes en matière plastique ou en acier inoxydable au moyen d'une ou de plusieurs pinces faisant fonction de bride, comprenant deux mors reliés entre eux, par exemple articulés, et des moyens de serrage et verrouillage. On a étendu l'application de telles réalisations au cas de récipients à usage biopharmaceutique comportant une poche en matière plastique. Ces poches sont soit relativement peu épaisses (dénommées parfois poches « pillow » ou poches « 2D » - D signifiant dimensions -) soit, comme l'expose le document FR-A-2 781 202, pourvues de deux grandes parois et soufflets latéraux, de manière à pouvoir, une fois expansée, prendre une forme tridimensionnelle et avoir un volume de 50 litres et plus (dénommées parfois poche 3D). De telles pinces, également connues sous le nom de « tri-clamp », font l'objet de nombreuses variantes d'exécution, telles que celles décrites notamment dans les documents EP-A-1 230 505, US-A-6 708 377, US-A-7 384 078, cette liste n'étant pas limitative. Un tel tri-clamp comprend classiquement une menotte de serrage ayant à chacune de ses deux extrémités en correspondance un renflement, un organe de serrage coopérant structurellement et fonctionnellement avec les deux renflements en vis-à-vis. Les documents EP-A-0 997 155 et EP-A-1 352 851 visent la mise en oeuvre de telles pinces ou tri-clamps.

A l'instar de la norme ISO 2852 : 1993, l'une des deux pièces objet du montage ou assemblage, par exemple la première pièce, présente une partie annulaire pourvue d'un renflement d'extrémité vers l'extérieur, dans le chant d'extrémité duquel est ménagée une rainure annulaire recevant un bourrelet d'étanchéité également annulaire. L'autre pièce, alors la deuxième pièce, présente également une partie annulaire pourvue d'un renflement d'extrémité vers l'extérieur. La pince, bride ou tri-clamp est destinée à venir se serrer sur les deux parties annulaires en les maintenant fermement l'une contre l'autre pour éviter leur désassemblage intempestif et assurer l'étanchéité.

Ces réalisations présentent un certain nombre de limites et d'inconvénients. Ces tri-clamps, classiquement à usage multiple, sont coûteux. Elles sont inadaptées au cas, de plus en plus fréquent et souhaité, d'un usage unique (en soi ou pour un processus pris globalement). Le plus souvent, leur diamètre intérieur ne dépasse pas une dizaine de centimètres, alors que de plus en plus fréquemment l'on envisage l'usage de dispositifs biopharmaceutiques plus importants en taille, notamment s'agissant des orifices des conteneurs. Leur mise en place s'avère souvent malaisée, longue et hasardeuse, dans la mesure où l'opérateur doit tenir la tri-clamp et la manoeuvrer (pour la fermer) et simultanément tenir au moins une, voire les deux, pièces, tout en les maintenant parfaitement positionnées l'une par rapport à l'autre. Ces inconvénients sont rédhibitoires lorsque, comme on le souhaite de plus en plus souvent, les deux pièces doivent pouvoir être assemblées rapidement et plus facilement.

On connaît également - par exemple du document US-A-5 350 080 - des ports pourvus de dents extérieures de maintien (dénommés parfois « hose-barb »). Ces réalisations présentent nombre de limites et d'inconvénients. Par exemple, leur diamètre est limité et ne permet pas des tailles importantes et leur mise en place, à force, est problématique.

On sait également qu'il existe dans le domaine biopharmaceutique le besoin de pouvoir monter ou assembler en vue d'un raccordement avec communication de façon fixe, rigide, amovible et étanche, des récipients à des enceintes stériles. On utilise pour ce faire des systèmes le plus souvent complexes, tels que ceux décrits dans les documents EP-A-0 800 480, EP-A-0 865 382. Ces réalisations sont bien adaptées à leur usage mais excluent l'usage unique.

L'homme du métier sait qu'il existe nombre de réalisations de couvercles d'obturation, dans lesquelles une première pièce formant couvercle comporte une paroi transversale et une paroi annulaire périphérique formant jupe, et une deuxième pièce à laquelle est destiné le couvercle, comporte une collerette annulaire et une ouverture d'extrémité (EP-A-1 336 572, US-A-2690854, EP-A-1 425 227, EP-A-1 666 368,

WO 2005/021396, WO 2007/122648). Ces réalisations sont spécifiques à leur usage et apportent des réponses à des problèmes propres qui ne sont pas ceux du domaine biopharmaceutique. Par exemple, et non limitativement, ces réalisations visent une production de masse destinée à tout un chacun et le montage ou l'assemblage est destiné à pouvoir résister pendant une durée importante (pouvant atteindre plusieurs années) ou, au contraire, le montage ou l'assemblage est éphémère et l'étanchéité n'est pas un facteur critique. Ces réalisations ne peuvent donc être transposées au domaine biopharmaceutique pour monter ou assembler, de façon fixe, rigide, amovible et étanche des pièces telles que des, ou des parties de, récipients, tubes, ou ports, avec les exigences inhérentes au domaine considéré et aux usages envisagés.

Enfin, il est également connu de l'état de la technique les documents US-B-2,690,854 et FR-A-2 379 450.

Le document US-B-2,690,854 décrit un fût métallique présentant une extrémité ouverte et un pliage de raidissement formant un rebord permettant de faire rouler le fût métallique lorsqu'il est empli et donc lourd. L'extrémité supérieure du fût est ouverte et possède un rebord courbé qui fait saillie vers l'extérieur du corps du tambour. Un couvercle en métal doté d'un pliage sur sa face supérieure est utilisé pour refermer le fût. Ce couvercle comporte des portions courbes formant une bride s'étendant vers le fût tout en maintenant un jeu suffisant pour permettre le passage du bord recourbé de ce fût. La bride forme un canal annulaire dans lequel est disposé un joint gonflable de caoutchouc, en néoprène ou matière similaire. Des solutions en latex ou en polymère peuvent également être utilisées. Toutefois, cet agencement ne permet pas de réaliser une étanchéité suffisante pour le domaine biopharmaceutique puisque le gonflement du joint gonflable tend à ouvrir le bord du couvercle et, ce faisant, à affaiblir le maintien et l'étanchéité du dispositif.

Le document FR-A-2 379 450 décrit une feuille flexible en caoutchouc présentant un bord périphérique qu'il s'agit de relier à joint étanche contre une plaque de pression formant une paroi latérale redressée d'un plateau disposé sur la base d'un conteneur et formant partie de cette base. La base du conteneur présente une autre paroi latérale située à distance de la paroi de pression, de sorte que ces deux parois forment entre elles une rainure dans laquelle est placé un élément rigide, en métal ou en plastique. L'élément rigide présente sur sa longueur deux chambres recevant chacune un tube gonflable en matériau élastique supposé assuré un joint d'étanchéité. Ce dispositif n'est pas adapté au domaine biopharmaceutique non plus, notamment car il n'assure pas une liaison fixe et rigide, amovible et étanche de la feuille flexible vis-à-vis de la plaque de pression. Au contraire, l'action des seuls joints gonflables sur la feuille flexible ne permet pas de la maintenir efficacement contre la plaque de pression.

Il existe donc un besoin non satisfait pour monter ou assembler - à savoir obturer ou raccorder avec communication - de manière fixe, amovible et étanche, une première pièce et une deuxième pièce, telles que des, ou plus des parties de, récipients, tubes, ou ports, utilisées dans des procédés et dispositifs du domaine biopharmaceutique avec comme exigences inhérentes, une possibilité d'usage unique (en soi ou pour un processus pris globalement), un faible coût, une mise en place (c'est-à-dire montage ou assemblage) et un désassemblage rapides, un montage ou assemblage étanche, une possibilité d'application dans le cas de dispositifs biopharmaceutiques dont les ouvertures concernées par le raccordement peuvent atteindre une cinquantaine de centimètres de diamètre, une mise en place aisée, rapide et sûre. Il existe également un besoin d'ensembles de pièces (une première pièce et une deuxième pièce) pouvant être montées ou assemblées comme indiqué et qui procède d'une conception « versatile » permettant une grande diversité de fonctions et d'applications, dans le domaine biopharmaceutique. Dans ce domaine, et outre ce qui a été déjà indiqué, il importe que les matériaux mis en oeuvre soient tels que les composants et dispositifs réalisés à partir d'eux gardent leur intégrité lors de la stérilisation, par exemple par rayonnement γ, que les dispositifs mis en oeuvre satisfassent aux agréments des autorités sanitaires et soient compatible avec une utilisation en salle blanche. Par ailleurs, le plus souvent, les ensembles de pièces considérés ici (première pièce et deuxième pièce) sont destinés, dans le cadre d'une utilisation standard, à recevoir des fluides à pression atmosphérique ou voisine de la pression atmosphérique et à des températures positives comprises entre des températures proches de 0°C jusqu'à des températures de l'ordre de 40°C.

L'invention a pour but de répondre à ce besoin qui correspond à des exigences spécifiques du domaine biopharmaceutique.

A cet effet, selon un premier aspect, l'invention vise une pièce (première pièce 1) spécialement destinée à être montée de manière fixe et rigide, amovible et étanche, sur une collerette annulaire rigide d'une deuxième pièce ayant une ouverture d'extrémité, la première pièce, d'axe XX :
∘ comportant une paroi transversale, apte à venir dans l'ouverture ;
∘ comportant une paroi annulaire formant jupe, ayant une face intérieure, n'ayant aucune, ou n'ayant qu'une faible, capacité d'élargissement sous une action extérieure dans le sens de l'élargissement ;
∘ comportant une enceinte torique de maintien, creuse, adjacente à la face intérieure de la jupe et située vers l'intérieur de celle-ci, déformable entre un état rétracté dans lequel elle est aplatie sur elle-même et un état expansé dans lequel elle est en volume et remplie avec un média de gonflage peu compressible ; au moins un port entrée/sortie du média de gonflage en communication fluidique avec l'enceinte de maintien et accessible depuis l'extérieur de la jupe, apte à permettre l'entrée ou la sortie du média de gonflage dans l'enceinte torique de maintien ; et une valve située à l'extérieur de la jupe ;
∘ dont les dimensions sont choisies, relativement à celles de la collerette, de manière à être apte, lorsque l'enceinte de maintien est à l'état rétracté, d'être enfilée sur ou désenfilée de la deuxième pièce et lorsque l'enceinte de maintien est à l'état expansé à être montée de manière fixe et rigide, et étanche, sur la collerette, la partie conjuguée de la face interne de l'enceinte de maintien étant au contact avec serrage de maintien sur la partie conjuguée de la face extérieure de la collerette ;
caractérisée par le fait que :
∘ la paroi transversale, d'étanchéité intrinsèque, soit est continue et pleine soit comporte au moins un orifice de passage ;
∘ la face intérieure de la jupe comprend :
   - une partie de forme cylindrique de plus grand diamètre attenante à la paroi transversale,
   - une partie de forme cylindrique de plus petit diamètre écartée axialement de la paroi transversale, entre les parties extrêmes axiales de laquelle est ménagée une gorge annulaire, l'enceinte torique de maintien étant maintenue par, et au moins partiellement logée dans, la gorge annulaire, la jupe portant l'enceinte de maintien,
   - et une partie intermédiaire de liaison de forme tronconique, attenante à la partie de plus grand diamètre et à la partie de plus petit diamètre ;
∘ la face intérieure de la jupe a une forme complémentaire de la face de la collerette abstraction faite de la gorge annulaire, la partie intermédiaire venant au contact avec serrage de maintien sur la partie conjuguée de la face, la première pièce prise dans son ensemble pouvant être déformée par incurvation pour son enfilage sur et désenfilage de la deuxième pièce;
∘ la première pièce étant réalisée en matériau adapté au domaine biopharmaceutique, domaine auquel est spécialement destinée la première pièce à mise en place fixe et rigide et étanche et enlèvement rapides, étant d'obturation de la deuxième pièce lorsque la paroi transversale est continue et pleine, ou étant de raccord avec communication à la deuxième pièce, lorsque la paroi transversale comporte un orifice de passage.

Selon une réalisation, l'enceinte torique de maintien est une pièce distincte de la jupe, rapportée sur elle, la gorge annulaire, de forme au moins partiellement complémentaire de celle l'enceinte torique de maintien, ayant une ouverture située dans la face intérieure de la jupe, la partie conjuguée de l'enceinte de maintien étant située radialement au droit de l'ouverture de la gorge, le au moins un port entrée/sortie traversant la jupe dans sa partie de plus petit diamètre de sa face intérieure.

Selon une réalisation, la jupe a, d'une part, une même épaisseur radiale ou des épaisseurs radiales voisines au droit de la partie de plus grand diamètre et au droit de la partie de plus petit diamètre au droit de l'enceinte torique de maintien et, d'autre part, une épaisseur radiale plus grande au droit de ses parties extrêmes axiales de plus petit diamètre, le diamètre intérieur de la partie conjuguée de la face interne de l'enceinte de maintien à l'état expansé étant égal ou légèrement inférieur au diamètre intérieur de la partie de plus petit diamètre de la jupe radialement au droit de ses parties extrêmes axiales de plus petit diamètre.

Selon une réalisation, la partie intermédiaire de la face intérieure de la jupe a une forme tronconique, ayant avec l'axe XX un angle d'inclinaison de l'ordre de 45°.

Selon une réalisation, dans le cas où la paroi transversale comporte un orifice de passage, la première pièce de montage comporte, en outre, une pièce tubulaire, délimitant l'orifice de la paroi transversale solidarisée avec la paroi transversale pour former un ensemble rigide s'étendant vers l'extérieur et/ou l'intérieur de la paroi transversale. La première pièce, pourvue de la pièce tubulaire, assure une fonction de raccord et de fixation rigide et de passage ou de transfert, la pièce tubulaire, s'étendant vers l'extérieur de la paroi transversale, étant apte à recevoir et fixer rigidement et de façon étanche la partie extrême annulaire d'une troisième pièce.

Selon les réalisations, une telle pièce tubulaire est rigide ou présente une certaine capacité de déformation.

Selon une réalisation, une telle pièce tubulaire, s'étendant vers l'extérieur de la paroi transversale, comporte une paroi tubulaire pour la réception et la fixation rigide et étanche de la partie extrême annulaire de la troisième pièce et à une extrémité de la paroi tubulaire, une collerette pour la fixation rigide à la partie de la paroi transversale formant le bord de l'orifice dont elle est pourvue.

Selon une réalisation, la pièce tubulaire comporte, vers l'extérieur de sa paroi tubulaire, une paroi cylindrique extérieure, ménageant avec cette paroi tubulaire un logement cylindrique annulaire apte à recevoir la partie extrême annulaire de la troisième pièce.

Selon une réalisation, la pièce tubulaire comporte, formant un ensemble rigide avec elle, une collerette transversale, dirigée vers l'extérieur, apte à constituer un moyen de suspension de la troisième pièce, coopérant avec une paroi support pourvue d'un trou.

Selon une réalisation, dans le cas où la paroi transversale comporte un orifice de passage, il est prévu une troisième pièce ayant une partie extrême annulaire, laquelle est apte à être, ou est, fixée directement à la partie de la paroi transversale formant le bord de l'orifice.

Selon les réalisations, la troisième pièce a soit une forme de poche ouverte ou non à l'opposé de la partie extrême annulaire soit une forme de tube.

Selon une réalisation, il est prévu une pièce de fermeture associée à la troisième pièce, le cas échéant à la pièce tubulaire, ayant pour fonction d'ouvrir ou de fermer le passage formé par la partie extrême annulaire de la troisième pièce.

Selon une réalisation, la pièce de montage comporte un premier moyen périphérique annulaire d'étanchéité en forme de bourrelet arrondi en section droite transversale et situé à proximité de la jupe, un deuxième moyen périphérique annulaire d'étanchéité conjugué en forme de rainure arrondie en section droite transversale étant ménagé sur le chant d'extrémité de la collerette.

Selon une réalisation, la pièce de montage peut comporter en outre au moins une languette périphérique extérieure attenante au bord libre de la jupe et d'un seul tenant avec elle, apte à contribuer à la mise en place et/ou l'enlèvement de la première pièce sur et/ou de la collerette de la deuxième pièce.

Selon une réalisation, la paroi transversale et la jupe sont réalisées en silicone ou matériau équivalent.

Selon une réalisation, l'enceinte de maintien est réalisée en silicone ou matériau équivalent si elle est gonflée avec un liquide ou en butyle ou matériau équivalent si elle est gonflée avec un gaz, auquel cas l'enceinte le butyle est enrobé vers l'extérieur par un matériau acceptable en salle blanche et plus généralement dans le domaine biopharmaceutique, tel que du silicone ou équivalent.

Selon une réalisation, les matériaux constitutifs de la pièce sont antistatiques.

Selon un deuxième aspect, l'invention vise un ensemble, spécialement destiné au domaine biopharmaceutique, comprenant une première pièce de montage telle qu'elle vient d'être décrite et une deuxième pièce sur laquelle elle est montée de manière fixe et rigide, amovible et étanche. La deuxième pièce, creuse, comporte une ouverture d'extrémité délimitée par une collerette annulaire rigide, ayant, du côté de l'ouverture, un renflement dirigé vers l'extérieur, la face extérieure de la collerette comprenant une partie de plus grand diamètre vers le renflement et l'ouverture, une partie de plus petit diamètre écartée du renflement et de l'ouverture et une partie intermédiaire, de manière que, à l'état actif où la première pièce est montée sur la deuxième pièce, la partie conjuguée de la face interne de l'enceinte de maintien vient au contact avec serrage de maintien et étanchéité sur la partie conjuguée de la face extérieure de la collerette de la deuxième pièce, la première pièce étant à mise en place et enlèvement rapides sur la deuxième pièce.

Selon une réalisation, le deuxième moyen d'étanchéité, tel qu'une rainure annulaire, est ménagé sur le chant d'extrémité de la collerette formant le renflement, avec lequel coopère, lorsqu'il est prévu, un premier moyen périphérique annulaire d'étanchéité en forme de bourrelet arrondi en section droite transversale et situé à proximité de la jupe.

Selon une première réalisation, le fait que la deuxième pièce est un port faisant partie d'un récipient de stockage ou de traitement, comprenant en outre une poche ayant un fond et à l'opposé du fond une ouverture destinée à être associée rigidement, respectivement associée rigidement, à la deuxième pièce à l'opposé de son ouverture d'extrémité.

Selon une réalisation, une telle poche comporte une paroi latérale souple pouvant se trouver dans deux états extrêmes, respectivement plié à plat et déployé, et dans tout état intermédiaire, et être déformée pour passer d'un état à un autre.

Selon une réalisation, le récipient comporte de façon intégrée des moyens de traitement de son contenu.

Selon une réalisation, la deuxième pièce formant port constitue en outre des moyens de protection des moyens de traitement, leur partie interne active étant essentiellement disposée dans l'espace interne de la deuxième pièce formant port lorsque la poche est à l'état plié à plat, la partie périphérique de l'espace interne de la deuxième pièce formant port formant une chambre de protection de la poche et des moyens de traitement.

Selon une réalisation, les moyens de traitement sont disposés au moins pour partie à l'intérieur de la poche en étant adjacents à son fond, à l'opposé de la deuxième pièce formant port.

Selon une seconde réalisation, la deuxième pièce est un tube.

Selon une première réalisation de l'ensemble, la paroi transversale est continue et pleine, la première pièce étant d'obturation de la deuxième pièce.

Selon une seconde réalisation de l'ensemble, la paroi transversale comporte au moins un orifice de passage, la première pièce étant de raccord avec communication à la deuxième pièce.

Selon une réalisation, l'ensemble comporte une troisième pièce comprenant une partie extrême annulaire raccordée de façon rigide et étanche à la première pièce, directement ou par l'intermédiaire de la pièce tubulaire déjà mentionnée.

Selon une réalisation, l'ensemble comporte en outre une pièce de fermeture associée à la troisième pièce, le cas échéant à la pièce tubulaire, ayant pour fonction d'ouvrir ou de fermer le passage formé par la partie extrême annulaire.

Selon un troisième aspect, l'invention vise un procédé de montage ou assemblage de la première pièce de montage à et sur la deuxième pièce d'un ensemble tel qu'il vient d'être décrit, dans lequel :
∘ on dispose d'une première pièce et d'une deuxième pièce non montées ou assemblées l'une avec l'autre, l'enceinte de maintien de la première pièce étant à l'état rétracté ;
∘ on positionne la première pièce au regard et dans l'axe de la deuxième pièce;
∘ on enfile la jupe sur la collerette, et on positionne axialement la première pièce sur la deuxième pièce;
∘ dans cette position, on fait passer l'enceinte de maintien de la première pièce de l'état rétracté à l'état expansé;
∘ de sorte que, dans cette situation où la première pièce, à l'état actif, est montée ou assemblée sur la deuxième pièce, la partie conjuguée de la face interne de l'enceinte de maintien vient au contact avec serrage de maintien et étanchéité sur la partie conjuguée de la face extérieure de la collerette de la deuxième pièce.

Selon un quatrième aspect, l'invention vise un procédé de désassemblage de la première pièce de montage de la deuxième pièce d'un ensemble tel qu'il vient d'être décrit, dans lequel :
∘ on dispose d'une première pièce et d'une deuxième pièce montées ou assemblées l'une avec et sur l'autre, l'enceinte de maintien de la première pièce étant à l'état expansé ;
∘ on fait passer l'enceinte de maintien de la première pièce de l'état expansé à l'état rétracté;
∘ on désenfile la première pièce de la deuxième pièce, jusqu'à ce que les deux pièces soient désassemblées.

Selon un cinquième aspect, l'invention vise un procédé de mise en oeuvre d'un ensemble tel que décrit précédemment avec poche pliable, dans lequel :
∘ on dispose d'un récipient de stockage ou de traitement ;
∘ on part d'une situation dans laquelle :
   ▪ la poche du récipient est à l'état plié à plat,
   ▪ l'ouverture d'extrémité du port du récipient formant la deuxième pièce est occulté par la première pièce disposée vers le haut et montée sur et assemblée à la deuxième pièce, et
   ▪ la poche est placée par son fond sur le fond du conteneur ;
∘ un orifice d'introduction de produit du récipient étant ouvert, on introduit progressivement dans le récipient un produit et simultanément on laisse la poche se déployer vers le haut et être mise en volume par le conteneur, jusqu'à avoir introduit dans le récipient la quantité souhaitée du produit ;
∘ on désassemble la première pièce de la deuxième pièce et on ouvre ainsi l'ouverture d'extrémité de la deuxième pièce ;
∘ cette ouverture d'extrémité de la deuxième pièce étant ainsi ouverte, on introduit par celle-ci, dans la poche, un produit et/ou un moyen de traitement et/ou de mesure du contenu de la poche et, une fois cette dernière étape terminée,
∘ on monte ou assemble la première pièce à et sur la deuxième pièce.

Dans une réalisation correspondant au cas où le récipient comporte de façon intégrée des moyens de traitement comprenant des moyens de mélange disposés à l'intérieur de la poche en étant adjacents à son fond, le procédé est tel que :
∘ l'ouverture d'extrémité du port du récipient formant la deuxième pièce étant occulté par la première pièce et un orifice d'introduction de produit du récipient étant ouvert, on introduit dans le récipient la quantité souhaitée d'un produit ;
∘ on désassemble la première pièce de la deuxième pièce et on ouvre ainsi l'ouverture d'extrémité de la deuxième pièce ;
∘ cette ouverture d'extrémité de la deuxième pièce étant ainsi ouverte, on introduit par celle-ci, dans la poche, une quantité souhaitée d'un produit ;
∘ on met en oeuvre les moyens de mélange ;
∘ on monte ou assemble la première pièce à et sur la deuxième pièce ;
∘ et on poursuit la mise en oeuvre des moyens de mélange.

Selon un sixième aspect, l'invention vise un procédé de mise en oeuvre d'un ensemble dans le cas où la troisième pièce est une poche ouverte à l'opposé de sa partie extrême annulaire, en vue d'insérer un produit P dans le récipient via la troisième pièce (poche ouverte ), dans lequel :
∘ on dispose d'un récipient de stockage ou de traitement comprenant une poche et d'une troisième pièce (poche ouverte) raccordée de façon rigide et étanche à la première pièce ;
∘ on associe une pièce de fermeture à la partie extrême de la troisième pièce (poche ouverte) et on la manoeuvre pour fermer le passage formé par la partie extrême annulaire ;
∘ la troisième pièce (poche ouverte) étant ouverte à l'opposé de sa partie extrême annulaire ainsi fermée, on introduit par celle-ci, dans cette troisième pièce (poche), la quantité souhaitée du produit P;
∘ on ferme l'ouverture de la troisième pièce (poche) à l'opposé de sa partie extrême annulaire fermée ;
∘ on monte ou assemble la première pièce à et sur la deuxième pièce, aucune communication n'existant alors entre la poche du récipient de stockage ou de traitement et la troisième pièce (poche);
∘ lorsque souhaité, on manoeuvre la pièce de fermeture pour ouvrir le passage formé par la partie extrême annulaire, une communication étant alors établie entre la poche du récipient de stockage ou de traitement et la troisième pièce (poche);
∘ on fait passer le produit inséré dans la troisième pièce (poche) dans la poche du récipient de stockage ou de traitement.

Selon un septième aspect, l'invention vise un procédé de mise en oeuvre d'un ensemble dans le cas où la troisième pièce est une poche fermée à l'opposé de sa partie extrême annulaire, en vue d'insérer un produit P dans le récipient via la troisième pièce (poche fermée), dans lequel :
∘ on dispose d'un récipient de stockage ou de traitement comprenant une poche et d'une troisième pièce (poche fermée) raccordée de façon rigide et étanche à la première pièce ;
∘ la troisième pièce (poche) étant ouverte à sa partie extrême annulaire, on introduit par celle-ci, dans cette troisième pièce (poche), la quantité souhaitée du produit P ;
∘ on associe une pièce de fermeture à la partie extrême de la troisième pièce (poche) et on la manoeuvre pour fermer le passage formé par la partie extrême annulaire;
∘ on monte ou assemble la première pièce à et sur la deuxième pièce, aucune communication n'existant alors entre la poche du récipient de stockage ou de traitement et la troisième pièce (poche) renfermant le produit P;
∘ lorsque souhaité, on manoeuvre la pièce de fermeture pour ouvrir le passage formé par la la partie extrême annulaire, une communication étant alors établie entre la poche du récipient de stockage ou de traitement et la troisième pièce (poche) ;
∘ on fait passer le produit P inséré dans la troisième pièce (poche) dans la poche du récipient de stockage ou de traitement.

On décrit maintenant plusieurs modes de réalisation de l'invention à l'aide des dessins, dans lesquels :

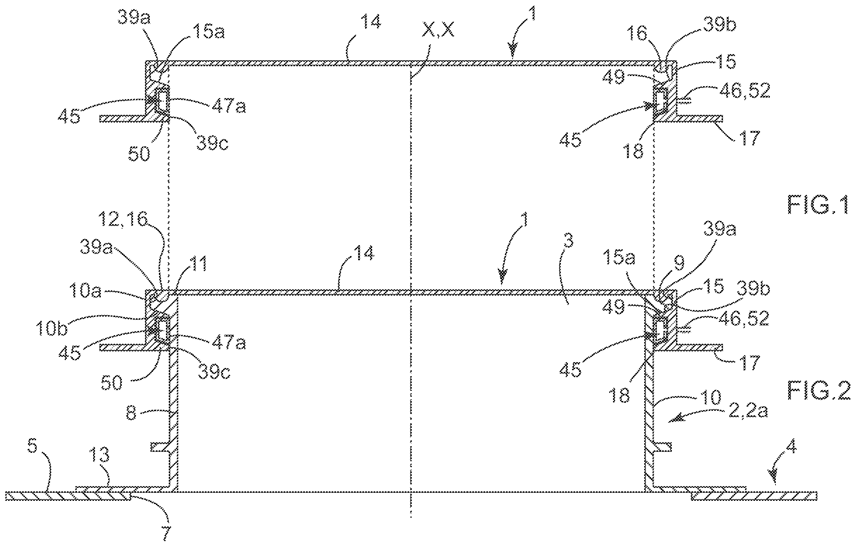

- la figure 1 est une vue en coupe axiale d'une réalisation possible de la première pièce, dans le cas d'une paroi transversale continue et pleine avec bourrelet d'étanchéité, la première pièce étant au repos, inactive et désassemblée de la deuxième pièce;
- la figure 2 est une vue en coupe axiale de la réalisation de la première pièce de la figure 1, montée sur, ou assemblée à, la deuxième pièce en forme de port faisant partie d'un récipient comprenant en outre une poche représentée de façon symbolique et partielle, l'enceinte de maintien de la première pièce, active, venant au contact avec serrage de maintien sur la face extérieure de la collerette de la deuxième pièce ;

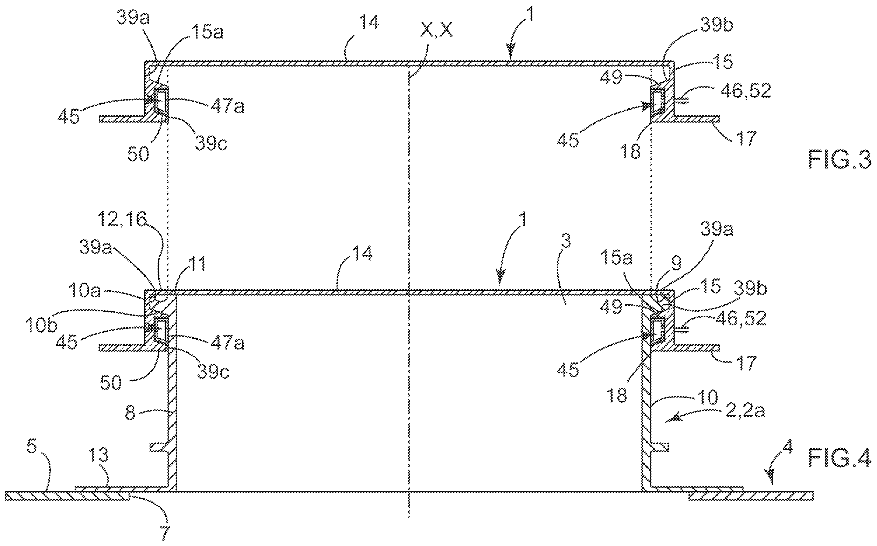

- la figure 3 est une vue en coupe axiale d'une autre réalisation possible de première pièce, dans le cas d'une paroi transversale continue et pleine sans bourrelet d'étanchéité, la première pièce étant au repos, inactive et désassemblée de la deuxième pièce;
- la figure 4 est une vue en coupe axiale de la réalisation de la première pièce de la figure 3, montée sur, ou assemblée à, la deuxième pièce en forme de port faisant partie d'un récipient comprenant en outre une poche représentée de façon symbolique et partielle, l'enceinte de maintien de la première pièce, active, venant au contact avec serrage de maintien sur la face extérieure de la collerette de la deuxième pièce ;

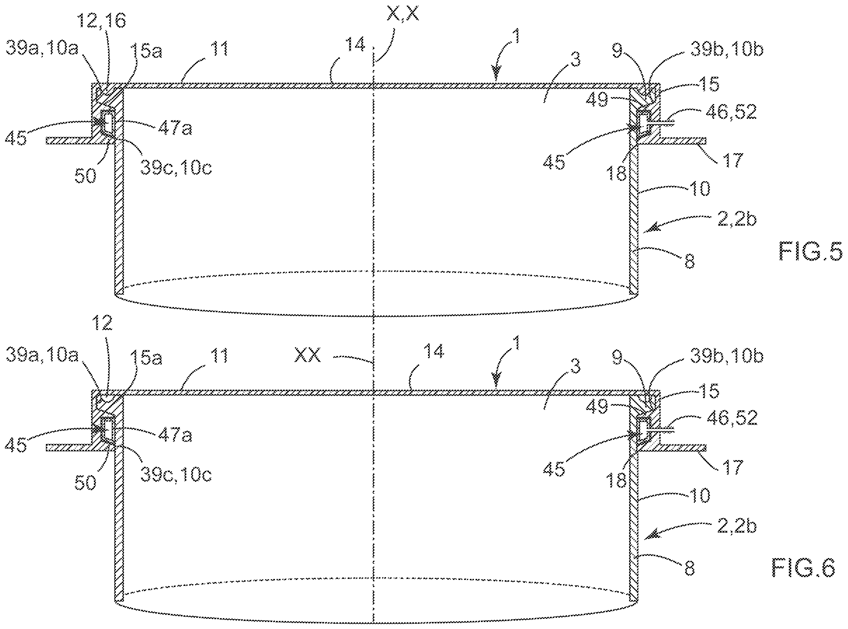

- la figure 5 est une vue en coupe axiale d'une réalisation possible de première pièce analogue à celle des figures 1 et 2, la deuxième pièce étant en forme de tube ;
- la figure 6 est une vue en coupe axiale d'une réalisation possible de première pièce analogue à celle des figures 3 et 4, la deuxième pièce étant en forme de tube ;

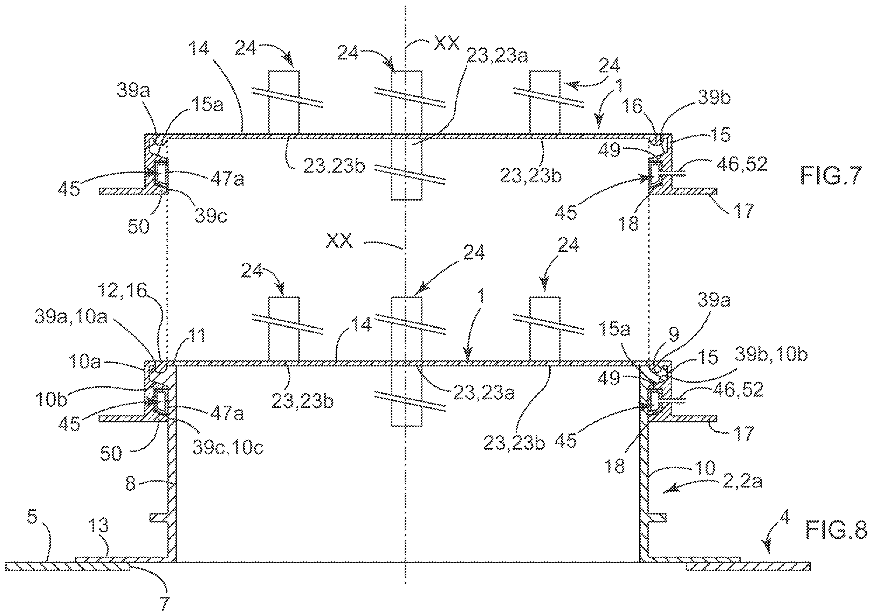

- la figure 7, analogue à la figure 1, est une vue en coupe axiale d'une autre réalisation possible de première pièce, dans le cas d'une paroi transversale avec bourrelet d'étanchéité et comportant plusieurs orifices de passage délimités par plusieurs pièces tubulaires, en l'espèce une s'étendant vers l'intérieur et plusieurs s'étendant vers l'extérieur, la première pièce étant au repos, inactive et désassemblée de la deuxième pièce
- la figure 8, analogue à la figure 2, est une vue en coupe axiale de la réalisation de la première pièce de la figure 7, montée sur, ou assemblée à, la deuxième pièce en forme de port faisant partie d'un récipient comprenant en outre une poche représentée de façon symbolique et partielle, l'enceinte de maintien de la première pièce, active, venant au contact avec serrage de maintien sur la face extérieure de la collerette de la deuxième pièce ;

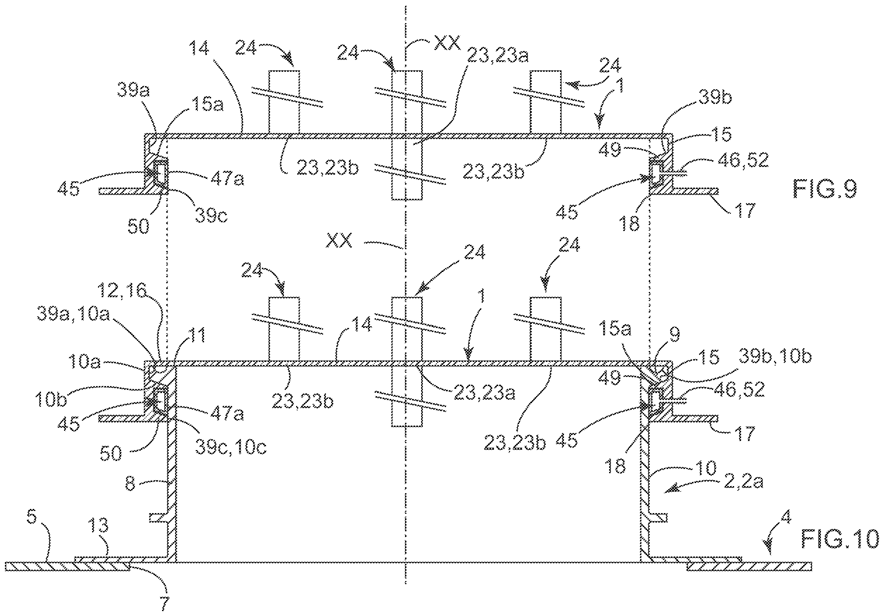

- la figure 9 est une vue en coupe axiale d'une autre réalisation possible de première pièce, dans le cas d'une paroi transversale sans bourrelet d'étanchéité et comportant plusieurs orifices de passage délimités par plusieurs pièces tubulaires, en l'espèce une s'étendant vers l'extérieur et plusieurs s'étendant vers l'extérieur ; la première pièce étant au repos, inactive et désassemblée de la deuxième pièce;
- la figure 10 est une vue en coupe axiale de la réalisation de la première pièce de la figure 9, montée sur, ou assemblée à, la deuxième pièce en forme de port faisant partie d'un récipient comprenant en outre une poche représentée de façon symbolique et partielle, l'enceinte de maintien de la première pièce, active, venant au contact avec serrage de maintien sur la face extérieure de la collerette de la deuxième pièce ;

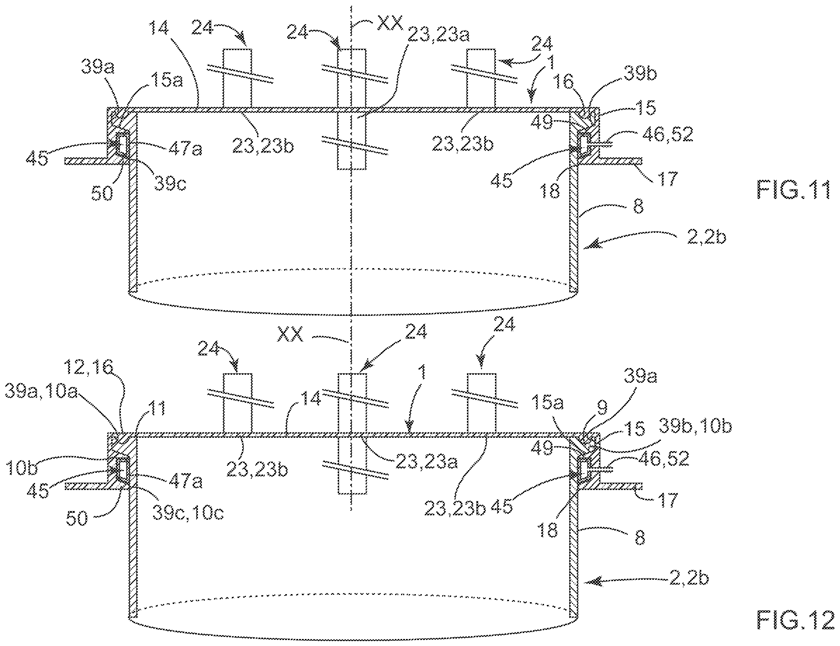

- la figure 11 est une vue analogue à la figure 8 (première pièce avec bourrelet d'étanchéité), dans le cas d'une deuxième pièce en forme de tube, l'enceinte de maintien de la première pièce, active, venant au contact avec serrage de maintien sur la face extérieure de la collerette de la deuxième pièce ;
- la figure 12 est une vue analogue à la figure 10 (première pièce sans bourrelet d'étanchéité), dans le cas d'une deuxième pièce en forme de tube, l'enceinte de maintien de la première pièce, active, venant au contact avec serrage de maintien sur la face extérieure de la collerette de la deuxième pièce ;

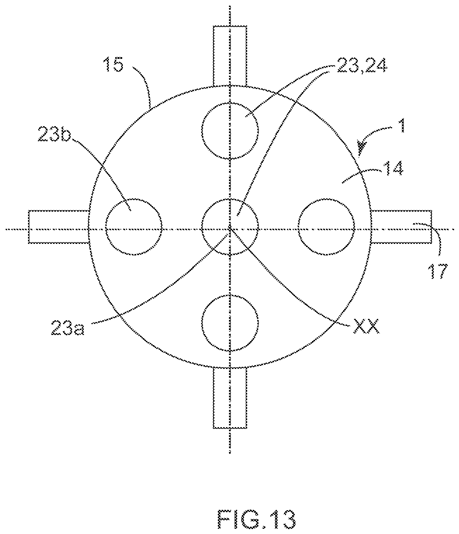

- la figure 13 est une vue de dessus en élévation de la première pièce selon une réalisation du type représenté sur les figures 7 et 9, la première pièce étant au repos, inactive et désassemblée de la deuxième pièce;

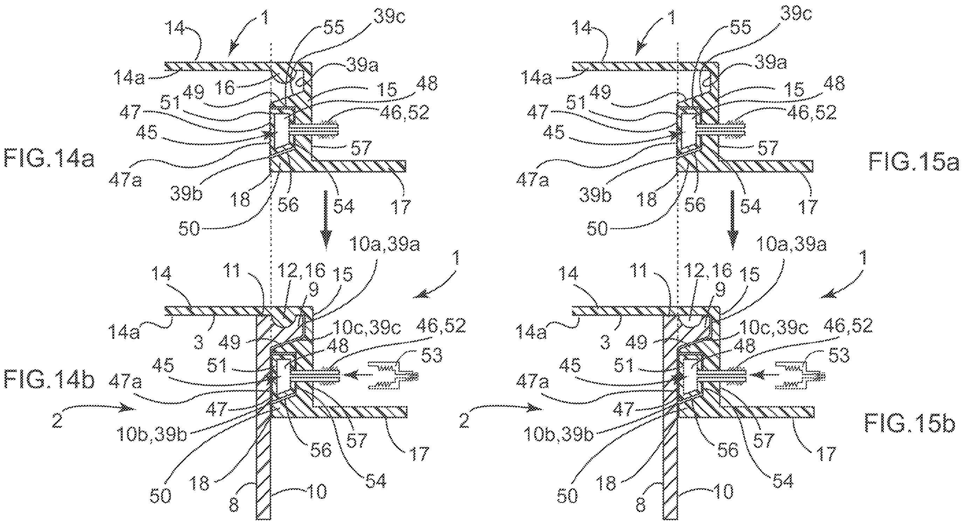

- les figures 14A et 14B sont deux schémas explicatifs, en coupe axiale et à plus grande échelle, illustrant la première pièce selon la variante de réalisation avec bourrelet d'étanchéité selon les figures 1, 2, 5, 7, 8 et 11, respectivement avant et après montage sur, ou assemblage à, la deuxième pièce ; la première pièce étant au repos, inactive et désassemblée de la deuxième pièce en figure 14A et l'enceinte de maintien de la première pièce, active, venant au contact avec serrage de maintien sur la face extérieure de la collerette de la deuxième pièce en figure 14B;
- les figures 15A et 15B sont deux schémas explicatifs, en coupe axiale et à plus grande échelle, illustrant la première pièce selon la variante de réalisation sans bourrelet d'étanchéité selon les figures 3, 4, 6, 9, 10 et 12, respectivement avant et après montage sur, ou assemblage à, la deuxième pièce ; la première pièce étant au repos, inactive et désassemblée de la deuxième pièce en figure 15A et l'enceinte de maintien de la première pièce, active, venant au contact avec serrage de maintien sur la face extérieure de la collerette de la deuxième pièce en figure 15B;

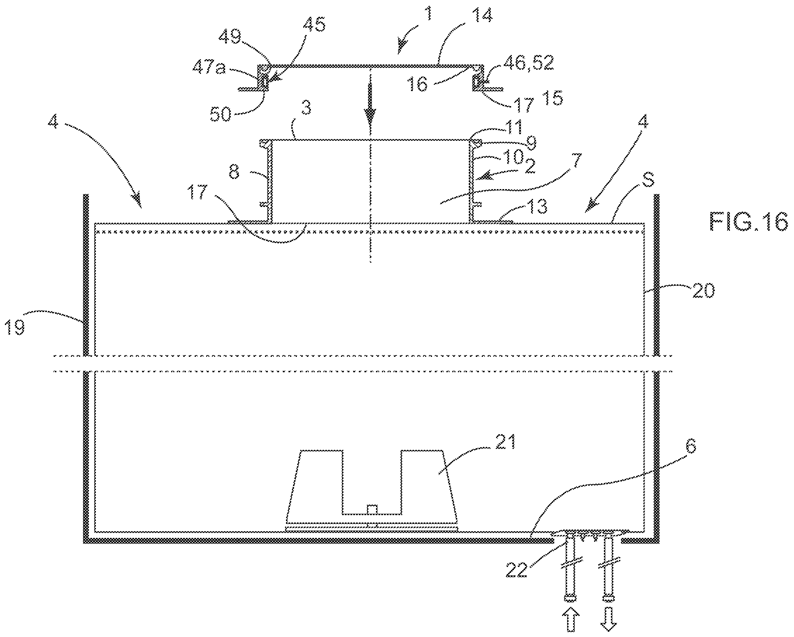

- la figure 16 est une vue schématique en coupe axiale d'un ensemble comprenant une première pièce selon la variante de réalisation avec bourrelet d'étanchéité selon les figures 1, 2, 5, 7, 8 et 11, et une deuxième pièce qui est un port faisant partie d'un récipient comprenant en outre une poche placée dans un conteneur rigide extérieur, la première pièce étant désassemblée de la deuxième pièce mais en regard de l'ouverture de la collerette de la deuxième pièce ;

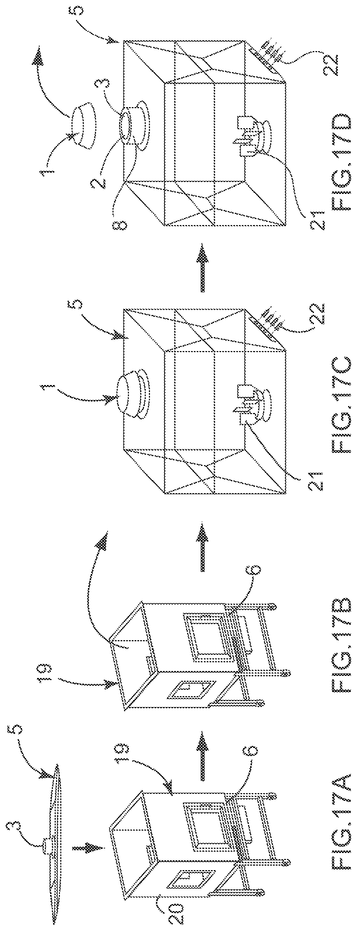

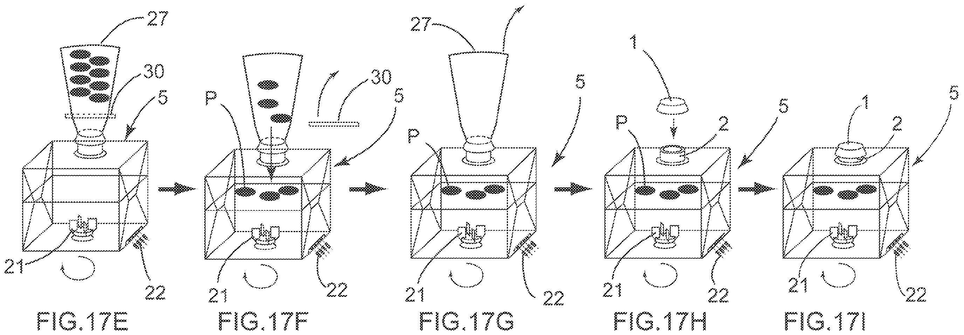

- la figure 17 est une série de neuf schémas successifs, 17A à 171, illustrant les étapes successives d'un procédé de mélange mettant en oeuvre une première pièce à paroi transversale continue et pleine;

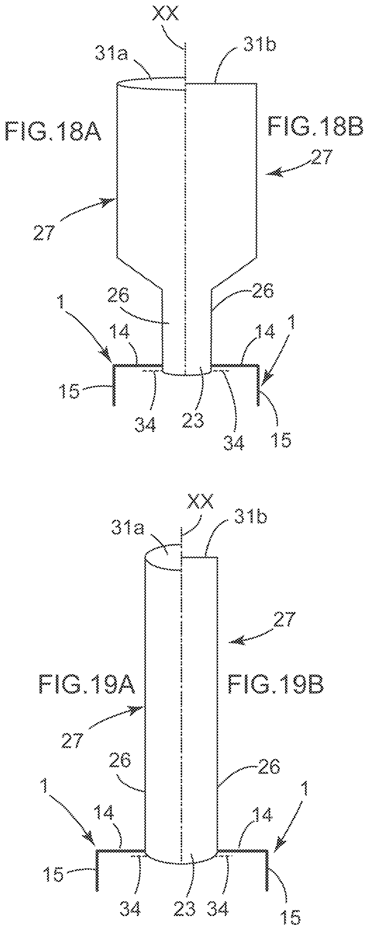

- les figures 18A et 18B sont deux demies-vues en coupe axiale d'un ensemble comportant une troisième pièce solidarisée directement à la première pièce dont la paroi transversale comporte une ouverture, la troisième pièce étant en forme de poche ouverte (demie-vue de gauche ou figure 18A) ou en forme de poche fermée (demie-vue de droite ou figure 18B), la première pièce étant ici représentée de façon purement symbolique ;
- les figures 19A et 19B sont deux demies-vues en coupe axiale d'un ensemble comportant une troisième pièce solidarisée directement à la première pièce dont la paroi transversale comporte une ouverture, la troisième pièce étant en forme de tube ouvert (demie-vue de gauche ou figure 19A) ou en forme de tube fermé (demie-vue de droite ou figure 19B), la première pièce étant ici représentée de façon purement symbolique ;

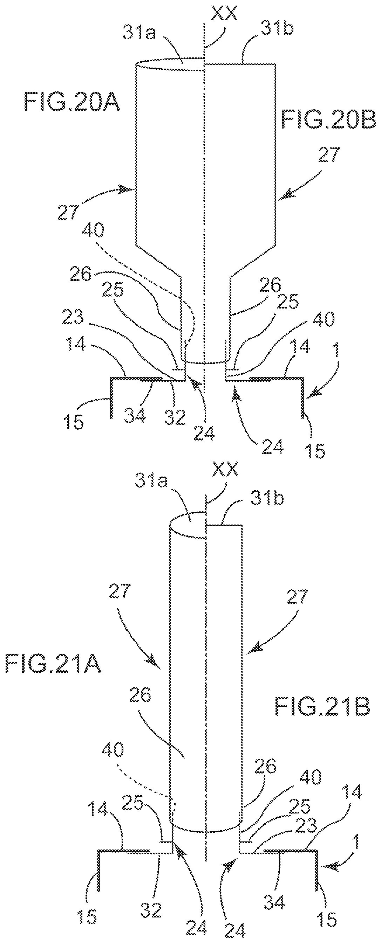

- les figures 20A et 20B sont deux demies-vues analogues aux figures 18A et 18B, l'ensemble comportant une troisième pièce solidarisée indirectement à la première pièce dont la paroi transversale comporte une ouverture par l'intermédiaire d'une pièce tubulaire, la troisième pièce étant en forme de poche ouverte (demie-vue de gauche ou figure 20A) ou en forme de poche fermée (demie-vue de droite ou figure 20B), la première pièce étant ici représentée de façon purement symbolique ;
- les figures 21A et 21B sont deux demies-vues en coupe axiale d'un ensemble comportant une troisième pièce solidarisée indirectement à la première pièce dont la paroi transversale comporte une ouverture, par l'intermédiaire d'une pièce tubulaire, la troisième pièce étant en forme de tube ouvert (demie-vue de gauche ou figure 21A) ou en forme de tube fermé (demie-vue de droite ou figure 21B), la première pièce étant ici représentée de façon purement symbolique ;

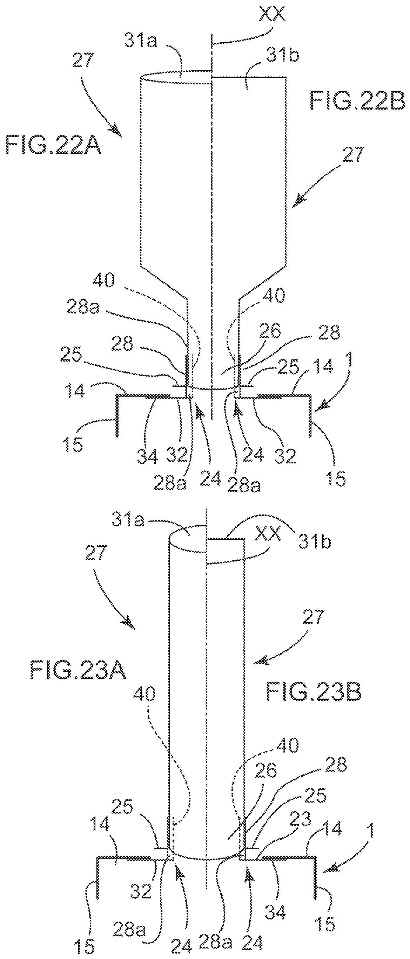

- les figures 22A, 22B, 23A et 23B sont analogues aux figures respectives 20A, 20B, 21A et 21 B, la pièce tubulaire ayant une autre forme de réalisation, la première pièce étant ici représentée de façon purement symbolique ;

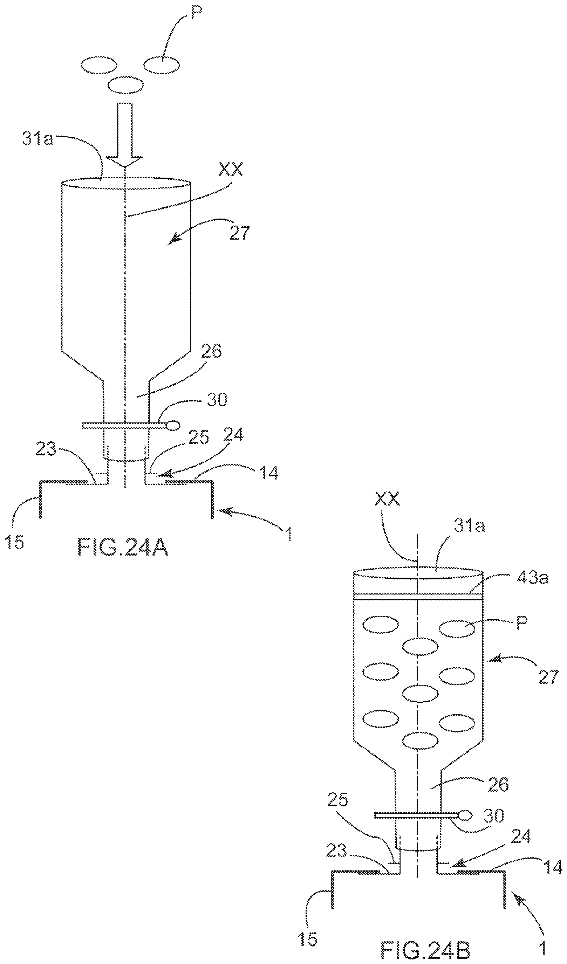

- les figures 24A et 24B sont deux vues en coupe axiale illustrant deux étapes successives d'un procédé de remplissage avec un produit, d'un ensemble comportant une troisième pièce en forme de poche ouverte axialement, solidarisée indirectement à la première pièce dont la paroi transversale comporte une ouverture par l'intermédiaire d'une pièce tubulaire telle que celle représentée sur les figures 20A et 20B, la première pièce étant ici représentée de façon purement symbolique ;

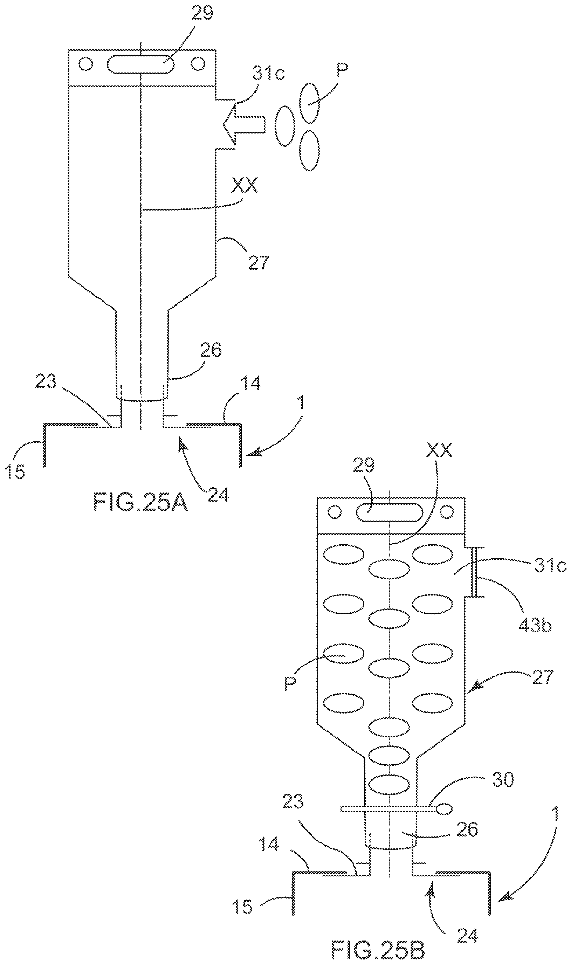

- les figures 25A et 25B sont deux vues analogues aux figures 24A et 24B, dans le cas d'une troisième pièce en forme de poche ouverte latéralement, la première pièce étant ici représentée de façon purement symbolique ;

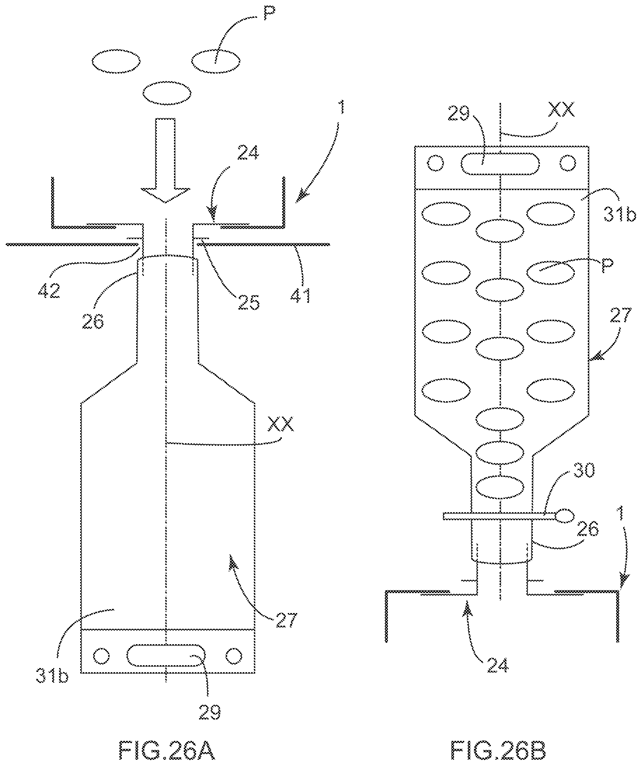

- les figures 26A et 26B sont deux vues en coupe axiale illustrant deux étapes successives d'un procédé de remplissage avec un produit, d'un ensemble comportant une troisième pièce en forme de poche fermée, solidarisée indirectement à la première pièce dont la paroi transversale comporte une ouverture par l'intermédiaire d'une pièce tubulaire telle que celle représentée sur les figures 20A et 20B, la première pièce étant ici représentée de façon purement symbolique ;

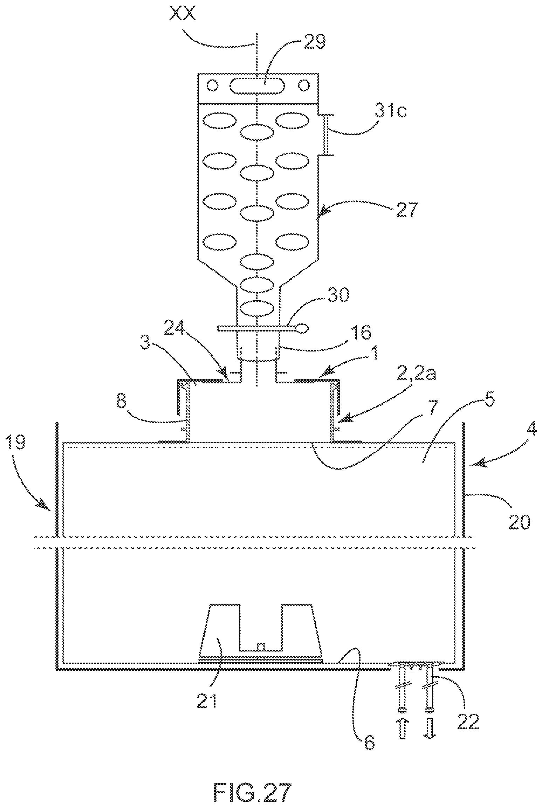

- la figure 27 est une vue schématique en coupe axiale d'un ensemble comprenant une première pièce selon la variante de réalisation sans bourrelet d'étanchéité selon les figures 3, 4, 6, 9, 10 et 12, 15A et 15B et une deuxième pièce qui est un port faisant partie d'un récipient comprenant en outre une poche placée dans un conteneur rigide extérieur, la première pièce étant montée sur et assemblée à la deuxième pièce, l'ensemble comportant également une troisième pièce en forme de poche ouverte latéralement et solidarisée indirectement à la première pièce dont la paroi transversale comporte une ouverture par l'intermédiaire d'une pièce tubulaire telle que celle représentée sur les figures 25A et 25B.

On se réfère maintenant aux figures 1 et 2 qui montrent une première pièce 1 de montage ou d'assemblage, et en l'espèce d'obturation, montée ou assemblée de manière fixe, amovible et étanche sur une deuxième pièce 2, rigide, creuse, de stockage ou de passage, avec une mise en place et un enlèvement rapides.

Les deux pièces 1 et 2, l'ensemble 1+2 formé par les deux pièces montées et assemblées, et les procédés et dispositifs associés sont spécialement destinés au domaine biopharmaceutique. On entend par là qu'ils sont conçus pour répondre à toutes les exigences et satisfaire à toutes les contraintes propres à ce domaine technique.

On décrit maintenant plus spécialement la deuxième pièce 2.

Dans la réalisation ici considérée, la deuxième pièce 2 est un port 2a ayant une ouverture d'extrémité 3, et fait partie d'un récipient 4 de stockage ou de traitement (figure 16), comprenant en outre une poche 5 ayant un fond 6 et à l'opposé du fond 6 une ouverture 7 destinée à être associée rigidement, respectivement associée rigidement, à la deuxième pièce 2 à l'opposé de son ouverture d'extrémité 3.

La deuxième pièce 2 présente un axe XX et comporte une collerette 8, annulaire, délimitant l'ouverture d'extrémité 3.

La deuxième pièce 2 est rigide avec un degré tel qu'elle est apte à encaisser les forces de serrage exercée sur elle par la première pièce 1, comme décrit par la suite.

L'ouverture d'extrémité 3 peut avoir un diamètre plus ou moins grand ou au contraire petit en fonction des applications. Dans le cas de récipients 4 de grande contenance, par exemple 3.000 litres, destiné au mélange, il peut être important que l'ouverture d'extrémité 3 ait un diamètre assez grand, par exemple pouvant atteindre de l'ordre de 50 centimètres. La pièce 1 est adaptée à ce cas de figure, tout comme à celui de très petits diamètres.

La collerette 8 forme, du côté de l'ouverture 3, un renflement 9 dirigé radialement vers l'extérieur.

La face extérieure 10 de la collerette 8 comprend une partie de forme cylindrique 10a de plus grand diamètre vers le renflement 9 et l'ouverture 3, une partie de forme cylindrique 10b de plus petit diamètre écartée du renflement 9 et de l'ouverture 3 et une partie 10c intermédiaire de liaison de forme tronconique dont la grande base est attenante à la partie 10a de plus grand diamètre et dont la petite base est attenante à la partie 10b de plus petit diamètre. En l'espèce, l'angle d'inclinaison de la partie 10c intermédiaire de forme tronconique sur l'axe XX est de l'ordre de 45°.

Le chant d'extrémité 11 du renflement 9 de la collerette 8 comporte, dans la réalisation considérée, un deuxième moyen 12 d'étanchéité, périphérique et annulaire, ayant en section droite transversale une forme de rainure arrondie, par exemple au moins sensiblement semi-circulaire.

A l'opposé du renflement 9 et de l'ouverture 3, dans la direction axiale, la deuxième pièce 2 comporte, faisant partie intégrante, un plateau annulaire 13 disposé radialement vers l'extérieur, rigidement fixé à la poche 5, au voisinage de son ouverture 7.

La deuxième pièce 2 a une forme cylindrique d'axe XX, à section transversale circulaire ou autre. Elle est réalisée en matière plastique ou en tout autre matériau équivalent compatible avec l'usage dans le domaine biopharmaceutique.

On décrit maintenant plus spécialement la première pièce 1, dans la réalisation ici considérée.

La première pièce 1 présente un axe XX qui, lorsque les deux pièces 1 et 2 sont montées l'une sur l'autre ou assemblées l'une à l'autre, est confondu avec l'axe XX de la deuxième pièce 2, les deux pièces 1 et 2 étant montées et assemblées coaxialement.

La première pièce 1 comporte une paroi transversale 14, ayant une face extérieure et une face intérieure 14a. Dans la réalisation considérée, la paroi transversale 14 est continue et pleine, la première pièce 1 ayant une fonction d'obturation une fois montée sur, et assemblée à, la deuxième pièce 2.

Comme cela est bien visible sur les figures, la face intérieure 14a de la paroi transversale 14 est formé d'une zone centrale sensiblement plane et d'une zone marginale positionnée en pourtour de la zone centrale afin de former une partie conjuguée du chant d'extrémité 11 de la collerette 3 apte à être appliquée contre lui et à participer à l'étanchéité entre les deux pièces 1, 2.

Selon cette réalisation, il existe une continuité sensiblement plane entre les zones centrale et marginale de la paroi transversale 14. Plus particulièrement, ces zones centrale et marginale s'étendent sensiblement selon un même plan.

Par ailleurs, aucune partie de la paroi transversale 14 ne vient sur la face interne de la collerette 8.

Ainsi, lorsque la première pièce 1, montée de manière fixe et rigide sur la deuxième pièce 2, doit être retirée, il est possible d'étirer légèrement la paroi transversale 14 de cette première pièce 1 sans qu'aucune portion ne vienne en butée contre la face intérieure de la collerette 8. Dans ce cas de figure, la zone centrale de la paroi transversale 14 peut être étirée transversalement et glisser sur le chant d'extrémité 11 de la collerette 8 jusqu'à ce que la première pièce 1 soit dans un état où elle peut être totalement retirée,

De la même façon, lorsque la première pièce 1 est dans un été inactif et qu'elle doit être montée de manière fixe et rigide sur la deuxième pièce 2, il est possible d'étirer légèrement la paroi transversale 14 de cette première pièce 1 et de venir positionner la première pièce 1 sur le chant d'extrémité 11 de la collerette 8. Grâce à la continuité sensiblement plane qui lie les zones centrale et marginale de la paroi transversale 14, celle-ci peut reposer sur le chant d'extrémité 11 de la collerette 8 et glisser sur lui sans qu'aucune portion ne vienne perturber ce glissement. La zone marginale de la paroi transversale 14 forme alors une partie conjuguée de ce chant d'extrémité 11.

La première pièce 1 comporte également une paroi annulaire périphérique formant jupe 15, ayant une face extérieure 57 et une face intérieure 15a.

La paroi transversale 14 et la jupe 15 sont d'un seul tenant, par exemple venues ensemble de fabrication. En variante, il s'agit de deux pièces distinctes assemblées rigidement entre elles.

Comme indiqué, la paroi transversale 14 a pour fonction, lorsque les deux pièces 1 et 2 sont montées et assemblées, de venir dans l'ouverture 3 afin de l'occulter.

La jupe 15 a pour fonction, en toute situation ou état, de porter une enceinte de maintien 45 et, lorsque les deux pièces 1 et 2 sont montées et assemblées, l'enceinte de maintien 45 étant alors à l'état expansé et sa face interne 47 au contact de la face extérieure 10 de la collerette 8, de contenir radialement vers l'extérieur l'enceinte de maintien 45 expansée, le serrage de maintien étant encaissé par la rigidité suffisante de la deuxième pièce 2. Les parties des faces 10, 10b, d'une part et 47, 47a d'autre part, au contact l'une de l'autre avec serrage de maintien sont qualifiées de « conjuguées ».

Les deux pièces 1, 2 ont des formes complémentaires permettant leur montage et assemblage. En particulier, la face intérieure 15a de la jupe 15 a une forme complémentaire de la face 10 de la collerette, abstraction faite d'une gorge 48 ménagée sur la face intérieure 15a de la jupe 15.

La face intérieure 15a de la jupe 15 comprend, par conséquent, une partie de forme cylindrique 39a de plus grand diamètre attenante à la paroi transversale 14, une partie de forme cylindrique 39b de plus petit diamètre écartée axialement de la paroi transversale 14 où se trouve la gorge 48 et une partie 39c intermédiaire de liaison de forme tronconique dont la grande base est attenante à la partie 39a de plus grand diamètre et dont la petite base est attenante à la partie 39b de plus petit diamètre. L'angle d'inclinaison de la partie 39c intermédiaire de forme tronconique sur l'axe XX est de l'ordre de 45°.

Une fois les deux pièces 1 et 2 montées et assemblées, la partie 39a de la jupe coopère avec la partie 10a de la face extérieure 10 de la collerette 8, ces deux parties 39a et 10a pouvant être qualifiées de conjuguées, tandis que la partie 39b coopère avec la partie 10b, ces deux parties 39b et 10b pouvant être qualifiées de conjuguées et la partie 39c vient au contact avec serrage de maintien et est conjuguée de la partie 10c.

Comme il a été indiqué, la première pièce 1 comporte également l'enceinte torique de maintien 45, intégrée à la pièce en étant rapportée sur la jupe 15.

L'enceinte torique de maintien 45 est creuse et adjacente à la face intérieure 15a de la jupe 15 en étant située vers l'intérieur de celle-ci.

L'enceinte torique de maintien 45 est déformable entre un état rétracté dans lequel elle est aplatie sur elle-même (figures 14A et 15A) et un état expansé dans lequel elle est en volume et remplie avec un média de gonflage peu compressible (figures 14B et 15B).

L'enceinte torique de maintien 45 est rapportée sur la jupe 15 et maintenue par, et au moins partiellement logée dans, la gorge annulaire 48 de la jupe 15.

La gorge 48 est, en section droite transversale, de forme au moins partiellement complémentaire de celle l'enceinte torique de maintien 45. Elle est ménagée dans la partie 39b de plus petit diamètre de la face intérieure 15a de la jupe 15 entre ses deux parties extrêmes axiales 49 - vers la paroi transversale 14 - et 50 - écartée de la paroi transversale 14 -, de plus petit diamètre.

La gorge 48 a en l'espèce, en section droite transversale une forme de - ou proche de celle d'un - trapèze rectangle dont la grande base est l'ouverture 51 de la gorge 48 et est située dans la face intérieure 15a de la jupe 15.

La petite base 54 de la gorge 48 forme son fond et est située au regard de l'ouverture 51.

Le petit coté orthogonal 55 de la gorge 48 est situé vers la partie extrême axiale 49 de la face intérieure 15a de la jupe 15 qui forme une sorte de saillie dirigée vers l'axe XX.

Le grand coté incliné 56 de la gorge 48 est situé vers la partie extrême axiale 50 de la face intérieure 15a de la jupe 15 qui forme une sorte de saillie dirigée vers l'axe XX en étant inclinée.

La partie conjuguée 47a de l'enceinte de maintien 45 étant située radialement au droit de l'ouverture 51 de la gorge 48 qu'elle remplit.

La première pièce 1 comporte également au moins un port entrée/sortie 46 d'un média de gonflage de l'enceinte de maintien 45 pour l'amener à l'état expansé.

Un tel port entrée/sortie 46 est en communication fluidique avec l'enceinte de maintien 45 et il est accessible depuis l'extérieur de la jupe 15.

Ce port entrée/sortie 46 est apte à permettre l'entrée ou la sortie du média de gonflage dans l'enceinte torique de maintien 45.

Le port entrée/sortie 46 traverse la jupe 15 dans sa partie 39b de plus petit diamètre de sa face intérieure 15a. Il comporte à l'extérieur de la jupe 15 une valve 52.

La valve 52 est apte, en premier lieu, à coopérer en communication fluidique avec un embout d'injection 53 du média de gonflage associé à des moyens d'amenée du média de gonflage pour permettre l'injection du média de gonflage dans l'enceinte de maintien 45 et le passage de celle-ci de l'état rétracté à l'état expansé et donc le maintien de la première pièce 1 assemblée à et sur la deuxième pièce 2.

La valve 52 est apte, en deuxième lieu, à être obturée pour permettre la conservation de l'enceinte de maintien 45 à l'état expansé et donc la conservation du maintien de la première pièce 1 assemblée à et sur la deuxième pièce 2.

La valve 52 est apte, en troisième lieu, à être ouverte pour permettre l'évacuation du média de gonflage depuis l'enceinte de maintien 45 et le passage de celle-ci de l'état expansé à l'état rétracté et donc l'enfilage sur ou le désenfilage de la première pièce 1 par rapport à la deuxième pièce 2.

Les dimensions de la première pièce 1 et de ses parties constitutives sont choisies en relation avec celles de la collerette 8 de la deuxième pièce 2.

Plus précisément, les dimensions sont choisies de manière que, lorsque l'enceinte de maintien 45 est à l'état rétracté, la première pièce 1 puisse être enfilée sur ou désenfilée de la deuxième pièce 2, le cas échéant moyennant une certaine incurvation donnée à force à la première pièce 1, manuellement, par l'opérateur.

D'autre part, les dimensions sont choisies de manière que, lorsque l'enceinte de maintien 45 est à l'état expansé, la première pièce 1 puisse être, respectivement est, montée de manière fixe et rigide, et étanche, sur la collerette 8 de la deuxième pièce 2, la partie conjuguée 47a de la face interne 47 de l'enceinte de maintien 45 étant alors au contact avec serrage de maintien et étanchéité sur la partie conjuguée 10b de la face extérieure 10 de la collerette 8.

La jupe 15 a une même épaisseur radiale ou des épaisseurs radiales voisines au droit de la partie 39a de plus grand diamètre et au droit de la partie 39b de plus petit diamètre au droit de la cavité 48 et de l'enceinte torique de maintien 45. Elle a, d'autre part, une épaisseur radiale plus grande au droit de ses parties extrêmes axiales 49, 50 de plus petit diamètre.

Ainsi, la face extérieure 57 de la jupe 15 peut avoir une forme générale cylindrique de diamètre constant ou de faible variation, radialement au droit des parties 39a, 39b et 39c.

De son côté, le diamètre intérieur de la partie conjuguée 47a de la face interne 47 de l'enceinte de maintien 45 à l'état expansé est égal ou légèrement inférieur au diamètre intérieur de la partie 39b de plus petit diamètre de la jupe 15 radialement au droit de ses parties extrêmes axiales 49, 50 de plus petit diamètre. En conséquence, à l'état expansé, la partie conjuguée 47a de la face interne 47 de l'enceinte de maintien 45 est coplanaire ou légèrement en saillie par rapport aux parties extrêmes axiales 49, 50 de la jupe 15.

La paroi transversale 14 et la jupe 15 sont réalisées en un matériau offrant une étanchéité intrinsèque, outre que la première pièce 1 est montée et assemblée sur la deuxième pièce 2 avec également une étanchéité entre elles. On entend ici par étanchéité, celle requise pour une application biopharmaceutique, concernant l'air, l'eau et notamment une barrière aux bactéries.

Abstraction faite de l'enceinte de maintien 45, la première pièce 1 prise dans son ensemble peut, par une action manuelle suffisante et appropriée de l'opérateur, être déformée par incurvation pour son enfilage sur et désenfilage de la deuxième pièce 2.

La jupe 15 n'a aucune, ou n'a qu'une faible, capacité d'élargissement sous une action extérieure dans le sens de l'élargissement et ce de manière à exercer sa fonction de contenir radialement vers l'extérieur l'enceinte de maintien 45 expansée. Cette caractéristique n'empêche pas la jupe 15 d'être déformée pour l'enfilage ou le désenfilage de la première pièce 1.

La première pièce 1 peut se trouver dans deux états ou situations typiques :
- Un état au repos, où la première pièce 1 est inactive, désassemblée de la deuxième pièce 2, l'enceinte de maintien 45 étant à l'état rétracté, comme représenté sur les figures 1 et 14A ;
- Un état actif, où la première pièce 1 est montée sur, ou assemblée à, la deuxième pièce 2, l'enceinte de maintien 45 de la première pièce 1 venant au contact avec serrage de maintien sur la face extérieure 10 de la collerette 8 de la deuxième pièce 2, comme représenté sur les figures 2 et 14B.

La face intérieure 15a de la jupe 15, à l'état inactif au repos, présente un diamètre sensiblement égal au diamètre extérieur de la face extérieure 10 de la collerette 8 (voir figures 14A et 14B).

La paroi transversale 14 comporte sur sa face intérieure 14a un premier moyen 16 d'étanchéité, périphérique et annulaire, en saillie, situé à proximité de la jupe 15 et ayant en section droite transversale une forme de bourrelet arrondi, par exemple au moins sensiblement semi-circulaire.

Les deux moyens d'étanchéité 12 et 16 sont conjugués et destinés à être associés l'un dans l'autre et ainsi à coopérer l'un avec l'autre, lorsque les deux pièces 1 et 2 sont montées ou assemblées.

A partir de l'état au repos de la première pièce 1 (figure 14A), la première pièce 1 et alors que l'enceinte de maintien 45 est à l'état rétracté, la jupe 15 de la première pièce 1 peut être enfilée sur la collerette 8 de la deuxième pièce 2. Le cas échéant, la première pièce 1 est incurvée lors de cette manoeuvre.

Puis, on injecte dans l'enceinte de maintien 45 le média de gonflement, grâce au port 46, notamment sa valve 52, et l'embout d'injection 53.

Compte tenu des dimensions relatives de la première pièce 1 par rapport à la deuxième pièce 2, notamment sa collerette 8, il est possible lorsque l'enceinte de maintien 45 est à l'état rétracté d'enfiler la première pièce 1 sur la deuxième pièce 2. Et il est possible, lorsque l'enceinte de maintien 45 est à l'état expansé, que la première pièce 1 soit montée de manière fixe et rigide, et étanche, sur la collerette 8 de la deuxième pièce 2, la partie conjuguée 47a de la face interne 47 de l'enceinte de maintien 45 étant au contact avec serrage de maintien et étanchéité sur la partie conjuguée 10b de la face extérieure 10 de la collerette 8, tandis que les parties 39a, 49, 50 et 39c de la jupe 15 coopèrent avec les parties correspondantes 10a, 10b et 10c de la collerette 8 de la deuxième pièce 2.

Par une manoeuvre inverse, la première pièce 1 peut, ensuite, inversement, être enlevée et désassemblée de la collerette 8.

Il est à noter que la mise en place de la première pièce 1 sur la deuxième pièce 2 est aisée, rapide et sûre. Il en est de même de l'enlèvement ou désassemblage de la première pièce 1 de la deuxième pièce 2. Le montage ou assemblage est donc également amovible et compte tenu de ce qui précède, bien adapté au cas où le processus employé nécessite plusieurs opérations d'ouverture et de fermeture, notamment pour des durées relativement limitées.

Une fois la première pièce 1 montée ou assemblée sur la deuxième pièce 2, le bourrelet d'étanchéité 16 de la paroi transversale 14 est associé avec étanchéité en étant logé dans la rainure d'étanchéité 12 conjuguée de la collerette 8 (figure 14B).

Dans cette situation, l'enceinte de maintien 45 de la première pièce 1 exerce sur la collerette 8 une force de serrage apte à assurer un maintien fixe et rigide, outre qu'étanche, avec la deuxième pièce 2 empêchant le désassemblage intempestif des deux pièces 1, 2, sauf à vider l'enceinte de maintien 45 de son média de gonflage pour l'amener à l'état rétracté.

Dans l'application considérée, à savoir le domaine biopharmaceutique, une telle première pièce 1 est apte à assurer un montage ou assemblage sur la deuxième pièce 2 aux fins d'obturation de l'ouverture d'extrémité 3, avec maintien de cette obturation. Il est entendu que dans cette application, le récipient 4 comportant la poche 5 est destiné à recevoir un fluide à pression atmosphérique ou voisine de la pression atmosphérique et à température positive entre des températures proches de 0°C jusqu'à des températures de l'ordre de 40°C. Ce récipient 4 est destiné en outre à rester stable, les pièces 1 et 2 étant disposées vers le haut. Par conséquent, le fluide contenu dans le récipient 4 ne peut par lui-même exercer sur la première pièce 1 une sollicitation extérieure qui serait suffisante pour entraîner son désassemblage.

Dans une réalisation possible, non exclusive d'autres, la première pièce 1 comporte en outre une ou plusieurs languettes 17 périphériques disposées radialement vers l'extérieur, attenantes au bord libre 18 de la jupe 15, attenant à la partie 39b, et d'un seul tenant avec elle. Cette ou ces languettes 17 sont de nature à faciliter la manipulation de la première pièce 1 en vue de son montage ou assemblage.

Pour obtenir les performances précédemment indiquées, la paroi transversale 14 et la jupe 15 sont réalisées en silicone ou matériau équivalent, particulièrement bien adapté au domaine biopharmaceutique, notamment gardant son intégrité lors de la stérilisation par rayonnement γ, répondant aux agréments des autorités sanitaires, et pouvant être mis en oeuvre en salle blanche.

Par exemple, dans une réalisation, on utilise un silicone de dureté Shore 55ShA.

De son côté, l'enceinte de maintien 45 est réalisée en silicone ou matériau équivalent si elle est gonflée avec un liquide ou en butyle ou matériau équivalent si elle est gonflée avec un gaz, auquel cas le butyle est enrobé vers l'extérieur par un matériau acceptable en salle blanche et plus généralement dans le domaine biopharmaceutique, tel que du silicone ou équivalent.

Préférentiellement, les matériaux constitutifs de la première pièce 1 sont antistatiques, et cela afin de ne pas gêner la mise en oeuvre de l'ensemble comportant les deux pièces 1, 2, dans le cas où elles sont en contact avec des matériaux en poudre.

D'autre part, les matériaux constitutifs de l'enceinte 45 de la première pièce 1 et de la deuxième pièce 2 ainsi que l'état de surfaces de leurs faces conjuguées sont tels, ou choisis de manière telle, que leur contact réciproque se fasse avec un frottement élevé ce qui contribue au maintien du montage ou assemblage des deux pièces 1 et 2 une fois réalisé.

Par suite de sa constitution, une telle première pièce 1 peut être relativement peu coûteuse à fabriquer, ce qui offre une possibilité d'usage unique (en soi ou pour un processus pris globalement).

Dans une réalisation possible, la paroi transversale 14 a une épaisseur de l'ordre du millimètre, tandis que la jupe 15 a une épaisseur pouvant être de l'ordre de six millimètres.

Pour assembler une telle première pièce 1 à et sur une telle deuxième pièce 2, on procède comme suit, ainsi que cela résulte des figures 14A et 14B.

On part d'une situation (figure 14A) où l'on dispose d'une première pièce 1 au repos, avec l'enceinte de maintien 45 à l'état rétracté, dont la forme et les dimensions sont adaptées à celles d'une deuxième pièce 2 à obturer, dont on dispose par ailleurs.

On positionne la première pièce 1 au regard et dans l'axe XX de la deuxième pièce 2 et, l'enceinte 45 étant à l'état rétracté, on peut alors enfiler la jupe 15 sur la collerette 8 de la deuxième pièce 2, jusqu'à ce que le bourrelet 16 vienne se loger dans la rainure 12, de manière que les deux pièces 1 et 2 soient parfaitement positionnées axialement, le cas échéant moyennant une incurvation donnée à la première pièce.

Dans cette position, on fait passer l'enceinte de maintien 45 de l'état rétracté à l'état expansé (figure 14B), le maintien étant ainsi assuré comme précédemment décrit.

Pour le désassemblage de la première pièce 1 de la deuxième pièce 2, on procède aux opérations inverses, comme déjà indiqué.

Les figures 3 et 4 montrent une autre réalisation, analogue à la précédente, si ce n'est que la première pièce 1 est dépourvue du bourrelet formant le premier moyen d'étanchéité prévu dans la réalisation précédente.

Les figures 15A et 15B, analogues au figures 14A et 14B illustrent le montage ou assemblage dans cette la réalisation correspondante.

La figure 5 montre une autre réalisation, identique aux figures 1 et 2 en ce qui concerne la première pièce 1, tandis que la deuxième pièce 2 n'est pas un port comme auparavant mais un tube 2b dont le diamètre peut être plus ou moins petit ou au contraire grand. Un tel tube 2b peut présenter une rigidité d'ensemble apte à encaisser les forces de serrage exercées par la première pièce 1. Le cas échéant, la rigidité du tube 2b est telle que celui-ci peut être incurvé à force si nécessaire par une sollicitation extérieure suffisante.

Un tel tube 2b comporte également une collerette 8 formée par sa partie extrême, cette collerette 8 ayant la même structure et la même fonction que pour le port 2a.

La figure 6 montre une autre réalisation, identique aux figures 3 et 4 en ce qui concerne la première pièce 1, tandis que la deuxième pièce 2 n'est pas non plus un port, mais un tube comme dans le cas de la figure 5.

Ainsi, l'invention peut faire l'objet de nombreuses applications différentes.

La première pièce 1 et l'ensemble 1+2 comprenant la première pièce 1 et la deuxième pièce 2 sont d'un coût de production permettant un usage unique. Le montage ou assemblage et le désassemblage des deux pièces 1 et 2 est rapide et sûr. Il assure une étanchéité comparable à celle obtenue aujourd'hui avec les tri-clamps. Les ouvertures 3 et 7 peuvent avoir un diamètre compris entre le centimètre ou une fraction de centimètre et une cinquantaine de centimètres, sans que la conception des pièces n'ait à être bouleversée.

Quant à la « versatilité », elle peut être illustrée en référence aux différentes variantes de réalisation déjà décrites et celles qui le sont ensuite.

Dans les réalisations précédentes, et comme représenté sur la figure 16, la deuxième pièce 2, en l'espèce un port 2a, fait partie d'un récipient 4 comprenant une poche 5 destinée à reposer par son fond 6 dans le fond d'un conteneur extérieur rigide de maintien 19 ouvert vers le haut. Une telle poche 5 comporte une paroi latérale 20, souple, à soufflets, pouvant se trouver dans deux états extrêmes, respectivement plié à plat et déployé, et dans tout état intermédiaire, et être déformée pour passer d'un état à un autre. Cette disposition constructive permet à la poche 5 - dite 3D - d'être de grandes dimensions et d'avoir un volume important pouvant atteindre 3.000 litres.

Dans la réalisation représentée, le récipient 4 comporte également, intégré à la poche 5, des moyens 21 de traitement de son contenu.

On entend par « traitement » toute action sur un produit biopharmaceutique, ou concernant ce produit, et impliquant un contact avec le produit, ce produit se trouvant bien entendu dans la poche 5.

Dans la réalisation particulière décrite par la suite, un tel traitement est le mélange, les moyens 21 étant des moyens de mélange.

Dans d'autres réalisations, le traitement est l'aération, la filtration, la mesure, cette liste n'étant pas limitative.

Dans tous les cas, on met en oeuvre des moyens 21 de traitement adaptés à l'action souhaitée.

Par exemple, les moyens 21 comportent une partie active interne, rigide dans son ensemble et, selon les cas, déformable ou non, telle qu'une hélice dans le cas du mélange, un aérateur dans le cas de l'aération, un filtre dans le cas de la filtration, une sonde dans le cas de la mesure, cette liste n'étant pas davantage limitative.

Dans tous les cas, les moyens 21 de traitement sont disposés au moins pour partie à l'intérieur de la poche 5 en étant adjacents à son fond 6. Ils sont donc situés à l'opposé de la deuxième pièce 2 ou port 2a.

Avec une telle réalisation, la deuxième pièce 2 ou port 2a, peut constituer en outre des moyens de protection des moyens 21 de traitement dont la partie interne active est essentiellement disposée dans l'espace interne de la deuxième pièce 2 ou port 2a, lorsque la poche 5 est à l'état plié à plat. La partie périphérique de l'espace interne de la deuxième pièce 2 ou port 2a, forme alors une chambre de protection de la poche 5 et des moyens 21 de traitement.

Un tel ensemble 1+2 peut être mis en oeuvre comme il est maintenant décrit en référence aux neuf schémas des figures 17A à 17I, formant ensemble la figure 17.

On part d'une situation où l'on dispose d'un récipient 4 comprenant une poche 5 à l'état plié à plat et un conteneur rigide 19.

Dans la réalisation représentée, la poche 5, à ce stade d'avancement du procédé, est déjà pourvue à l'intérieur des moyens 21 de traitement, par exemple ici des moyens 21 de mélange.

Dans cette situation, l'ouverture d'extrémité 3 du port 2a est occultée par la première pièce 1 disposée vers le haut et montée sur et assemblée au port 2a, comme il a été décrit précédemment.

La poche 5 est alors placée par son fond 6 sur le fond du conteneur rigide 19 (figure 17A).

La figure 17B illustre le conteneur rigide 19 contenant la poche 5, celle-ci n'étant pas visible, car masquée par les parois latérales verticales du conteneur 19.

Les schémas qui suivent, figures 17C à 17I, ne représentent que la poche 5, à plus grande échelle. Il est entendu que cette poche continue à se trouver dans le conteneur rigide 19, ici non représenté pour ne pas masquer la poche 5. En outre, on a représenté la poche 5 complètement déployée, dès le début du processus, pour des raisons de facilité de lecture des figures. Mais il doit être compris que la poche 5 se déploie vers le haut au fur et à mesure de son remplissage.

La poche 5 comprend un - ou plusieurs - orifices 22 d'introduction de produit, situés notamment à l'endroit ou au voisinage du fond 6, accessible depuis l'extérieur du conteneur 19.

Comme représenté sur la figure 17C, l'orifice 22 étant ouvert, on introduit progressivement dans la poche 5 du récipient 4 un produit fluide, en l'espèce liquide ou plus ou moins pâteux, et simultanément on laisse la poche se déployer vers le haut et être mise en volume par le conteneur 19 qui guide ses parois latérales 20.

On poursuit l'introduction de produit jusqu'à avoir introduit dans la poche 5 la quantité souhaitée de ce produit.

Jusqu'ici la première pièce 1 et le port 2a étaient montés ou assemblés, l'ouverture 3 étant de ce fait occultée.

Comme représenté sur la figure 17D, on désassemble alors la première pièce 1 du port 2a, comme il a été décrit précédemment, et on ouvre ainsi l'ouverture d'extrémité 3 du port 2a.

Comme représenté sur les figures 17E, 17F et 17G, l'ouverture d'extrémité 3 étant ainsi ouverte, on introduit par celle-ci, dans la poche 5, un une quantité souhaitée d'un autre produit, notamment en poudre. Cette introduction sera décrite par la suite.

Comme représenté sur la figure 17H, une fois cette dernière étape d'introduction terminée, on monte ou assemble de nouveau la première pièce 1 préalablement désassemblée (ou une pièce 1 identique) à et sur le port 2a, comme il a été décrit précédemment et on occulte de nouveau l'ouverture 3.

On met en oeuvre les moyens 21 de mélange ou on continue de les mettre en oeuvre si celle-ci a débuté lors de l'introduction du produit en poudre.

Dans les réalisations des figures 9 à 13, la paroi transversale 14 comporte au moins un orifice de passage 23. En l'espèce, il est prévu cinq orifices 23, à savoir un orifice central 23a et quatre orifices latéraux 23b situés sur deux axes perpendiculaires. D'autres dispositions peuvent être envisagées, dès lors qu'elles comprennent au moins un orifice 23.

Dans ces réalisations, la paroi transversale 14 comportant au moins un orifice de passage 23, la première pièce 1 a une fonction de raccordement avec communication, une fois montée sur, et assemblée à, la deuxième pièce 2.

La figure 9 montre une réalisation de la première pièce 1 dans laquelle celle-ci est dépourvue du bourrelet formant moyen d'étanchéité comme il a été décrit précédemment, cette première pièce 1 étant au repos sans sollicitation extérieure.

La figure 10 montre une réalisation dans laquelle une telle première pièce 1 est montée ou assemblée sur un port 2a, comme il a été décrit précédemment.

La figure 11 montre une autre réalisation dans laquelle une première pièce 1 avec bourrelet formant moyen d'étanchéité comme il a été décrit précédemment est montée ou assemblée non sur un port mais sur un tube.

La figure 12 montre une autre réalisation dans laquelle une première pièce 1 dépourvue de bourrelet formant moyen d'étanchéité comme il a été décrit précédemment est montée ou assemblée sur un tel tube.

Avec les réalisations des figures 9 à 13, il est possible de tirer parti de la première pièce 1 dont la paroi transversale 14 comporte un orifice 23, pour - une fois montée sur, et assemblée à - la deuxième pièce 2, assurer une fonction de raccordement avec communication entre la deuxième pièce 2, creuse et une troisième pièce 27, creuse, au moins partiellement souple, destinée au stockage par exemple, du type général formant poche.

Comme précédemment, et comme illustré par la figure 27, la pièce 2 peut être un port 2a ayant une ouverture d'extrémité 3, qui fait partie d'un récipient 4 de stockage ou de traitement, comprenant en outre une poche 5 ayant un fond 6 et à l'opposé du fond 6 une ouverture 7 destinée à être associée rigidement, respectivement associée rigidement, à la deuxième pièce 2 à l'opposé de son ouverture d'extrémité 3. Comme précédemment, il peut être prévu dans la poche 5 des moyens 21 de traitement, comme par exemple des moyens 21 de mélange.

Une telle troisième pièce 27 comporte une partie extrême annulaire 26, du côté de laquelle elle est fixée rigidement et de façon étanche, le cas échéant de façon amovible, à la première pièce 1.

Dans une réalisation, la troisième pièce 27 est une poche, notamment souple (figures 18A, 18B, 20A, 20B, 22A, 22B, 24A, 24B, 25A, 25B, 28A, 26B, 27).

Cette réalisation peut faire l'objet de différentes variantes d'exécution.

Dans une variante d'exécution représentée sur les figures 18A, 20A, 22A, 24A et 24B, la troisième pièce 27 comporte originellement, dans l'axe XX et à l'opposé de sa partie extrême annulaire 26, une ouverture axiale 31a.

Dans une autre variante d'exécution représentée sur les figures 18B, 20B, 22B, la troisième pièce 27 est fermée en permanence à sa partie d'extrémité 31b, opposée à sa partie extrême annulaire 26. Avec une telle réalisation, il est possible de tirer parti de la partie d'extrémité 31b fermée en permanence pour y aménager un moyen d'accrochage de la troisième pièce 27, tel qu'un oeillet 29.

Dans une autre variante d'exécution représentée sur les figures 25A, 25B, la troisième pièce 27 comporte originellement, à l'opposé de sa partie extrême annulaire 26, une ouverture latérale 31c. Avec une telle réalisation, la partie d'extrémité 31 b étant fermée en permanence, il est également possible d'y aménager un moyen d'accrochage de la troisième pièce 27, tel qu'un oeillet 29.

Dans une autre réalisation, la troisième pièce 27 est un tube ouvert à l'opposé de sa partie extrême annulaire 26 et raccordé à une poche ou analogue (figures 19A, 19B, 21A, 21B, 23A, 23B).

Dans les réalisations des figures 18A, 18B, 19A et 19B, la troisième pièce 27 est directement associée fixement et rigidement à la première pièce 1, le tronçon terminal élargi de la partie extrême annulaire 26 étant rigidement fixé, par exemple par soudage, à la partie 34 de la paroi transversale 14 formant le bord de l'orifice 23.

Dans les réalisations des figures 20A, 20B, 21A, 21B, 22A, 22B, 23A, 23B, 24A, 24B, 25A, 25B, 26A, 26B et 27, la troisième pièce 27 est indirectement associée fixement et rigidement à la première pièce 1, par l'intermédiaire d'une pièce tubulaire 24. En effet, la pièce tubulaire 24 est associée fixement et rigidement d'une part à la première pièce 1, d'autre part à la troisième pièce 27 en étant placée entre elles et en assurant entre elles un passage étanche. Avec un tel arrangement, la première pièce 1 pourvue de la pièce tubulaire 24 assure en combinaison une fonction de raccord et de fixation rigide avec la troisième pièce 27 et une fonction de passage ou de transfert, notamment d'un produit et/ou d'un moyen de traitement et/ou de mesure, l'ouverture d'extrémité 3 de la deuxième pièce 2 restant en effet ouverte.

Une telle pièce tubulaire 24 délimite l'orifice 23 et forme avec la première pièce 1 un ensemble rigide s'étendant vers l'extérieur et/ou l'intérieur de celle-ci. Par exemple, la pièce tubulaire 24 associée à l'orifice central 23a s'étend vers l'extérieur et l'intérieur, tandis que les pièces tubulaires 24 associées aux orifices latéraux 23 s'étendent uniquement vers l'extérieur. Par la suite, on s'intéressera plus spécialement aux pièces tubulaires 24 qui s'étendent uniquement vers l'extérieur ou à la partie extérieure des pièces tubulaires 24 qui s'étendent vers l'extérieur et l'intérieur. Une telle pièce tubulaire 24 ou une telle partie extérieure de pièce tubulaire 24 fait fonction de raccord fluidique entre la première pièce 1 et la troisième pièce 27.

Selon les réalisations, la pièce tubulaire de raccordement 24 est rigide, notamment plus rigide que la première pièce 1 et la troisième pièce 27, ou, au contraire, la pièce tubulaire de raccordement 24 présente une certaine capacité de déformation.

Afin que la pièce tubulaire de raccordement 24 puisse former un ensemble fixe, rigide et étanche avec la première pièce 1, il est prévu par exemple, de la pourvoir à l'une de ses extrémités, en l'espèce à l'extrémité attenante à la première pièce 1, d'une collerette 32, dirigée radialement vers l'extérieur.

Cette collerette 32 peut être fixée de façon rigide et étanche, par collage, soudage, ou équivalent, à la partie 34 de la paroi transversale 14 formant le bord de l'orifice 23.

La pièce tubulaire de raccordement 24 est associée de façon fixe, rigide et étanche à la troisième pièce 27. A cet effet, la paroi tubulaire 40 de la pièce tubulaire de raccordement située du côté opposé à la collerette 32 peut être fixée de façon rigide et étanche, par collage, soudage, ou équivalent, à la partie extrême annulaire 26 de la troisième pièce 27, le blocage de fin de course de montage de la troisième pièce 27 sur la pièce tubulaire de raccordement 24 étant assuré, pour autant que nécessaire, par le blocage du bord extrême libre de la partie extrême annulaire 26 sur la collerette 32 ou la paroi 14 attenante.

Dans la réalisation des figures 20A, 20B, 21A, 21B, 22A, 22B, 23A, 23B, 24A, 24B, 25A, 25B, 26A, 26B et 27, la pièce tubulaire de raccordement 24 comporte, formant un ensemble rigide avec elle, une collerette transversale 25, attenante à la paroi tubulaire 40 vers la collerette 32, dirigée radialement vers l'extérieur, continue ou non. Lorsque la troisième pièce 27 est fixée sur la première pièce 1, la collerette 25 est située à l'extérieur de la paroi transversale 14, notamment au voisinage de celle-ci.

Cette collerette transversale 25 est apte à constituer un moyen de suspension de la troisième pièce 27, coopérant avec une paroi support 41 pourvue d'un trou 42. Dans un tel cas, la troisième pièce 27 est disposée avec sa partie extrême annulaire 26 dirigée vers le haut, de sorte que la collerette transversale 25 repose sur la face supérieure de la paroi support 41 au voisinage du trou 42, tandis que la troisième pièce 27 est suspendue en dessous de la paroi support 41 (figure 26A).

Eventuellement, la collerette transversale 25 est apte à constituer un blocage de fin de course pour le bord extrême libre de la partie extrême annulaire 26.

Dans la réalisation des figures 22A, 22B, 23A, 23B, la pièce tubulaire 24 comporte, vers l'extérieur de la paroi tubulaire 24, une paroi cylindrique extérieure 28, ménageant avec la paroi tubulaire 24 un logement cylindrique annulaire 28a apte à recevoir la partie extrême annulaire 26.

Dans la réalisation des figures 24A, 24B, 25B, 26B et 27, il est prévu en outre une pièce de fermeture amovible 30, telle qu'une pince, destinée à être associée à la partie extrême annulaire 26 souple de la troisième pièce 27 avec pour fonction de fermer ou d'ouvrir le passage formé par celle-ci, afin, respectivement, d'empêcher ou au contraire d'autoriser, le passage du contenu de la troisième pièce 27 dans la poche faisant partie de la deuxième pièce 2.

Le cas échéant, la pièce de fermeture 30 est apte à être associée également à la pièce tubulaire 24, souple, avec pour fonction d'ouvrir ou de fermer le passage formé par celle-ci.

On se réfère maintenant plus spécialement aux figures 24A et 24B et on décrit le procédé de mise en oeuvre d'un ensemble comprenant outre les pièces 1 et 2, une troisième pièce 27 en forme de poche 27 comportant originellement, dans l'axe XX et à l'opposé de sa partie extrême annulaire 26, une ouverture axiale 31a. Ce procédé est destiné à insérer de façon aseptique - ou du moins protégée - un produit tel qu'un produit en poudre P dans la poche 5 associée à la deuxième pièce 2, par l'intermédiaire de la poche 27 formant la troisième pièce 27.

On part d'une situation dans laquelle on dispose d'un récipient 4 comprenant une poche 5, d'une deuxième pièce telle qu'un port 2a, d'une première pièce 1 à orifice 23 et d'une poche 27 (troisième pièce) ayant une ouverture axiale 31a à l'opposé de la partie extrême annulaire 26, cette poche 27 (troisième pièce) étant raccordée de façon rigide et étanche à la première pièce 1, directement ou indirectement par l'intermédiaire d'une pièce tubulaire 24, comme il a été décrit précédemment.

On associe une pièce de fermeture 30 à la partie extrême annulaire 26 de la poche 27 (troisième pièce) et on la manoeuvre de façon appropriée pour fermer le passage formé par celle-ci.

La poche 27 (troisième pièce) étant toujours ouverte grâce à l'ouverture 31a, à l'opposé de sa partie extrême annulaire 26 qui elle est fermée grâce à la pièce de fermeture 30, on introduit dans la poche 27, par l'ouverture 31a, la quantité souhaitée du produit P (figure 24A). Préférentiellement, cette étape est réalisée alors que l'ouverture 31a est placée en position supérieure, pour d'évidentes raisons de facilité, la poche 27 (troisième pièce) s'étendant vers le bas et la poche 5 étant placée en position inférieure.

On ferme ensuite l'ouverture 31a de la poche 27 (troisième pièce), par exemple par un soudage thermique transversal 43a, ou tout autre moyen équivalent. Ce faisant, on stocke ainsi le produit P conditionné dans la poche 27 (troisième pièce) (figure 24B).

On monte ou assemble alors la première pièce 1 à et sur la deuxième pièce 2, comme exposé précédemment. Dans cette situation, aucune communication n'existe entre la poche 27 (troisième pièce) contenant le produit P et la poche 5 du récipient 4.

Lorsqu'il est souhaité que le produit P soit introduit dans la poche 5, on manoeuvre la pièce de fermeture 30 de manière appropriée pour ouvrir le passage formé par la partie extrême annulaire 26 de la poche 27 (troisième pièce).

Une communication étant alors établie entre la poche 27 et la poche 5 du récipient 4, on fait passer le produit P stocké précédemment dans la poche 27 (troisième pièce) dans la poche 5 du récipient 4. Préférentiellement, cette étape est réalisée comme précédemment alors que la partie extrême annulaire 26 de la poche 27 (troisième pièce) est placée en position inférieure, pour d'évidentes raisons de facilité, le produit P pouvant passer par gravité de la poche 27 (troisième pièce) à la poche 5 du récipient 4 placée en dessous.

On se réfère maintenant plus spécialement aux figures 25A et 25B qui visent une variante du procédé qui vient d'être décrit.

Dans cette variante du procédé, on met en oeuvre une poche 27 (troisième pièce) qui comporte originellement non pas une ouverture axiale 31a mais une ouverture latérale 31c, la poche 27 (troisième pièce) comportant un moyen d'accrochage tel qu'un oeillet 29 à sa partie d'extrémité fermée 31b.

Cette variante du procédé est identique à la précédente, si ce n'est que le produit P est inséré dans la poche 27 (troisième pièce) non par une ouverture axiale telle que 31a, mais par l'ouverture latérale 31c, que l'on ferme ensuite l'ouverture 31c de la poche 27 (troisième pièce), par exemple par un soudage thermique de direction axiale 43b et non transversale, enfin que la poche 27 (troisième pièce) est commodément maintenue avec sa partie d'extrémité fermée 31b en position supérieure et sa partie extrême annulaire 26 en position inférieure, par simple suspension par gravité, étant suspendue par l'oeillet 29 à un crochet support approprié.

On se réfère maintenant plus spécialement aux figures 26A et 26B et on décrit le procédé de mise en oeuvre d'un ensemble comprenant outre les pièces 1 et 2, une troisième pièce 27 en forme de poche 27 (troisième pièce) ayant une partie d'extrémité fermée 31 b.

On part d'une situation dans laquelle on dispose d'un récipient 4 comprenant une poche 5, d'une deuxième pièce telle qu'un port 2a, d'une première pièce 1 à orifice 23 et d'une poche 27 (troisième pièce) ayant une partie d'extrémité fermée 31 b, cette poche 27 (troisième pièce) étant raccordée de façon rigide et étanche à la première pièce 1, directement ou indirectement par l'intermédiaire d'une pièce tubulaire 24, comme il a été décrit précédemment.

On introduit dans la poche 27 (troisième pièce) la quantité souhaitée du produit P par l'ouverture terminale de la partie extrême annulaire 26. Préférentiellement (figure 26A), cette étape est réalisée, pour d'évidentes raisons de facilité, alors que la poche 27 (troisième pièce) est disposée avec sa partie extrême annulaire 26 en position supérieure et sa partie d'extrémité fermée 31b en position inférieure, ce qui est rendu possible par le fait que la pièce tubulaire de raccordement 24 de la poche 27 (troisième pièce) à la première pièce 1 comporte, comme décrit précédemment, une collerette transversale 25 coopérant avec la paroi support 41 pourvue d'un trou 42. Le produit P est alors introduit dans la poche 27 (troisième pièce) par simple gravité.

Puis, on associe une pièce de fermeture 30 à la partie extrême 26 de la poche 27 (troisième pièce) et on la manoeuvre pour fermer le passage formé par celle-ci. On stocke ainsi le produit P conditionné dans la poche 27 (troisième pièce).

On monte ou assemble alors la première pièce 1 à et sur la deuxième pièce 2, comme exposé précédemment. Dans cette situation, aucune communication n'existe entre la poche 27 (troisième pièce) contenant le produit P et la poche 5 du récipient 4.

Lorsqu'il est souhaité que le produit P soit introduit dans la poche 5, on manoeuvre la pièce de fermeture 30 de manière appropriée pour ouvrir le passage formé par la partie extrême annulaire 26 de la poche 27 (troisième pièce).

Une communication étant alors établie entre la poche 27 et la poche 5 du récipient 4, on fait passer le produit P stocké précédemment dans la poche 27 (troisième pièce) dans la poche 5 du récipient 4.

Préférentiellement, cette étape est réalisée après retournement haut-bas de la poche 27 (troisième pièce), la partie extrême annulaire 26 de la poche 27 (troisième pièce) précédemment en position supérieure étant amenée en position inférieure, et la partie d'extrémité fermée 31 b précédemment en position inférieure étant amenée en position supérieure, la poche 27 (troisième pièce) étant suspendue par gravité par l'oeillet 29 à un crochet support approprié. Ainsi, le produit P peut passer par gravité de la poche 27 (troisième pièce) à la poche 5 du récipient 4 placée en dessous.

## Revendications

1. Pièce (première pièce 1) spécialement destinée à être montée de manière fixe et rigide, amovible et étanche, sur une collerette annulaire (8) rigide d'une deuxième pièce (2) ayant une ouverture d'extrémité (3), la première pièce (1), d'axe XX :
∘ comportant une paroi transversale (14), apte à venir dans l'ouverture (3) ;
∘ comportant une paroi annulaire formant jupe (15), ayant une face intérieure (15a), n'ayant aucune, ou n'ayant qu'une faible, capacité d'élargissement sous une action extérieure dans le sens de l'élargissement ;
∘ comportant une enceinte torique de maintien (45), creuse, adjacente à la face intérieure (15a) de la jupe (15) et située vers l'intérieur de celle-ci, déformable entre un état rétracté dans lequel elle est aplatie sur elle-même et un état expansé dans lequel elle est en volume et remplie avec un média de gonflage peu compressible ; au moins un port entrée/sortie (46) du média de gonflage en communication fluidique avec l'enceinte de maintien (45) et accessible depuis l'extérieur de la jupe (15), apte à permettre l'entrée ou la sortie du média de gonflage dans l'enceinte torique de maintien (45); et une valve (52) située à l'extérieur de la jupe (15) ;
∘ dont les dimensions sont choisies, relativement à celles de la collerette (8), de manière à être apte, lorsque l'enceinte de maintien (45) est à l'état rétracté, d'être enfilée sur ou désenfilée de la deuxième pièce (2) et lorsque l'enceinte de maintien (45) est à l'état expansé à être montée de manière fixe et rigide, et étanche, sur la collerette (8), la partie conjuguée (47a) de la face interne (47) de l'enceinte de maintien (45) étant au contact avec serrage de maintien sur la partie conjuguée (10b) de la face extérieure (10) de la collerette (8) ;
**caractérisée par le fait que** :
∘ la paroi transversale (14), d'étanchéité intrinsèque, soit est continue et pleine soit comporte au moins un orifice de passage (23) ;
∘ la face intérieure (15a) de la jupe (15) comprend :
• une partie de forme cylindrique (39a) de plus grand diamètre attenante à la paroi transversale (14),
• une partie de forme cylindrique (39b) de plus petit diamètre écartée axialement de la paroi transversale (14), entre les parties extrêmes axiales (49, 50) de laquelle est ménagée une gorge annulaire (48), l'enceinte torique de maintien (45) étant maintenue par, et au moins partiellement logée dans, la gorge annulaire (48), la jupe (15) portant l'enceinte de maintien (45),
• et une partie intermédiaire de liaison (39c) de forme tronconique, attenante à la partie de (39a) de plus grand diamètre et à la partie (39b) de plus petit diamètre ;
∘ la face intérieure (15a) de la jupe (15) a une forme complémentaire de la face (10) de la collerette (8) abstraction faite de la gorge annulaire (48), la partie intermédiaire (39c) venant au contact avec serrage de maintien sur la partie conjuguée (10c) de la face (10), la première pièce (1) prise dans son ensemble pouvant être déformée par incurvation pour son enfilage sur et désenfilage de la deuxième pièce (2);
∘ la première pièce (1) étant réalisée en matériau adapté au domaine biopharmaceutique, domaine auquel est spécialement destinée la première pièce (1) à mise en place fixe et rigide et étanche et enlèvement rapides, étant d'obturation de la deuxième pièce (2) lorsque la paroi transversale (14) est continue et pleine, ou étant de raccord avec communication à la deuxième pièce (2), lorsque la paroi transversale (14) comporte un orifice de passage (23).

2. Pièce de montage (1) selon la revendication 1, **caractérisée par le fait que** l'enceinte torique de maintien (45) est une pièce distincte de la jupe (15), rapportée sur elle, la gorge annulaire (48), de forme au moins partiellement complémentaire de celle l'enceinte torique de maintien (45), ayant une ouverture (51) située dans la face intérieure (15a) de la jupe (15), la partie conjuguée (47a) de l'enceinte de maintien (45) étant située radialement au droit de l'ouverture (51) de la gorge (48), le au moins un port entrée/sortie (46) traversant la jupe (15) dans sa partie (39b) de plus petit diamètre de sa face intérieure (15a).

3. Pièce de montage (1) selon l'une quelconque des revendications 1 et 2, **caractérisée par le fait que** la jupe (15) a, d'une part, une même épaisseur radiale ou des épaisseurs radiales voisines au droit de la partie (39a) de plus grand diamètre et au droit de la partie (39b) de plus petit diamètre au droit de l'enceinte torique de maintien (45) et, d'autre part, une épaisseur radiale plus grande au droit de ses parties extrêmes axiales (49, 50) de plus petit diamètre, le diamètre intérieur de la partie conjuguée (47a) de la face interne (47) de l'enceinte de maintien (45) à l'état expansé étant égal ou légèrement inférieur au diamètre intérieur de la partie (39b) de plus petit diamètre de la jupe (15) radialement au droit de ses parties extrêmes axiales (49, 50) de plus petit diamètre.

4. Pièce de montage (1) selon l'une quelconque des revendications 1 à 3, **caractérisée par le fait que** la partie intermédiaire (39c) de la face intérieure (15a) de la jupe (15) a une forme tronconique, ayant avec l'axe XX un angle d'inclinaison de l'ordre de 45°.

5. Pièce de montage (1) selon l'une quelconque des revendications 1 à 4, dans le cas où la paroi transversale (14) comporte un orifice de passage (23), **caractérisée par le fait qu'**elle comporte, en outre, une pièce tubulaire (24), délimitant l'orifice (23), solidarisée à la paroi transversale (14) pour former un ensemble rigide s'étendant vers l'extérieur et/ou l'intérieur de la paroi transversale (14), la première pièce (1) pourvue de la pièce tubulaire (24) assurant une fonction de raccord et de fixation rigide et de passage ou de transfert, la pièce tubulaire (24) s'étendant vers l'extérieur de la paroi transversale (14) étant apte à recevoir et fixer rigidement et de façon étanche la partie extrême annulaire (26) d'une troisième pièce (27).

6. Pièce de montage (1) selon la revendication 5, **caractérisée par** une pièce tubulaire (24) s'étendant vers l'extérieur de la paroi transversale (14), comportant une paroi tubulaire (40) pour la réception et la fixation rigide et étanche de la partie extrême annulaire (26) de la troisième pièce (27) et à une extrémité de la paroi tubulaire (40), une collerette (32) pour la fixation rigide à la partie (34) de la paroi transversale (14) formant le bord de l'orifice (23), et/ou comportant, vers l'extérieur de la paroi tubulaire (40), une paroi cylindrique extérieure (28), ménageant avec la paroi (40) un logement cylindrique annulaire (28a) apte à recevoir la partie extrême annulaire (26) de la troisième pièce (27) et, en particulier, comportant, formant un ensemble rigide avec elle, une collerette transversale (25), dirigée vers l'extérieur, apte à constituer un moyen de suspension de la troisième pièce (27), coopérant avec une paroi support (41) pourvue d'un trou (42).

7. Pièce de montage (1) selon l'une quelconque des revendications 1 à 4, dans le cas où la paroi transversale (14) comporte un orifice de passage (23), **caractérisée par** une troisième pièce (27) ayant une partie extrême annulaire (26), laquelle est apte à être, ou est, fixée directement à la partie (34) de la paroi transversale (14) formant le bord de l'orifice (23).

8. Pièce de montage (1) selon l'une quelconque des revendications 4 à 7, **caractérisée par** une troisième pièce (27) ayant soit une forme de poche ouverte ou non à l'opposé de la partie extrême annulaire (26) soit une forme de tube.

9. Pièce de montage (1) selon l'une quelconque des revendications 4 à 8, **caractérisée par** une pièce de fermeture (30) associée à la troisième pièce (27), le cas échéant à la pièce tubulaire (24), ayant pour fonction d'ouvrir ou de fermer le passage formé par la partie extrême annulaire (26).

10. Pièce de montage (1) selon l'une quelconque des revendications 1 à 9, **caractérisée par** un premier moyen périphérique annulaire d'étanchéité (16) en forme de bourrelet arrondi en section droite transversale et situé à proximité de la jupe (15), et un deuxième moyen périphérique annulaire d'étanchéité conjugué (12) en forme de rainure arrondie en section droite transversale, ménagée sur le chant d'extrémité (11) de la collerette (8).

11. Pièce de montage (1) selon l'une quelconque des revendications 1 à 10, **caractérisée par le fait qu'**elle comporte en outre au moins une languette périphérique extérieure (17) attenante au bord libre (18) de la jupe (15) et d'un seul tenant avec elle, apte à contribuer à la mise en place et/ou l'enlèvement de la première pièce (1) sur et/ou de la collerette (8) de la deuxième pièce (2).

12. Pièce de montage (1) selon l'une quelconque des revendications 1 à 11, **caractérisée par le fait que** la paroi transversale (14) et la jupe (15) sont réalisées en silicone ou matériau équivalent et/ou **par le fait que** l'enceinte de maintien (45) est réalisée en silicone ou matériau équivalent si elle est gonflée avec un liquide ou en butyle ou matériau équivalent si elle est gonflée avec un gaz, le butyle étant enrobé vers l'extérieur par un matériau acceptable dans le domaine biopharmaceutique, tel que du silicone ou équivalent, et, en particulier **par le fait que** les matériaux constitutifs de la pièce de montage (1) sont antistatiques.

13. Ensemble, spécialement destiné au domaine biopharmaceutique, comprenant une première pièce de montage (1) selon l'une quelconque des revendications 1 à 12 et une deuxième pièce (2) sur laquelle elle est montée de manière fixe et rigide, amovible et étanche, **caractérisé par le fait que** la deuxième pièce (2), creuse, comporte une ouverture d'extrémité (3) délimitée par une collerette annulaire rigide (8), ayant, du côté de l'ouverture (3), un renflement (9) dirigé vers l'extérieur, la face extérieure (10) de la collerette (8) comprenant une partie (10a) de plus grand diamètre vers le renflement (9) et l'ouverture (3), une partie (10b) de plus petit diamètre écartée du renflement (9) et de l'ouverture (3) et une partie (10c) intermédiaire, de manière que, à l'état actif où la première pièce (1) est montée sur la deuxième pièce (2), la partie conjuguée (47a) de la face interne (47) de l'enceinte de maintien (45) vient au contact avec serrage de maintien et étanchéité sur la partie conjuguée (10b) de la face extérieure (10) de la collerette (8) de la deuxième pièce (2), la première pièce (1) étant à mise en place et enlèvement rapides sur la deuxième pièce (2).

14. Ensemble selon la revendication 13, **caractérisé par le fait que** le deuxième moyen d'étanchéité (12), tel qu'une rainure annulaire, est ménagé sur le chant d'extrémité (11) de la collerette (8) formant le renflement (9), avec lequel coopère, lorsqu'il est prévu, un premier moyen périphérique annulaire d'étanchéité (16) en forme de bourrelet arrondi en section droite transversale et situé à proximité de la jupe (15).

15. Ensemble selon l'une quelconque des revendications 13 et 14, **caractérisé par le fait que** la deuxième pièce (2) est un port (2a) faisant partie d'un récipient (4) de stockage ou de traitement, comprenant en outre une poche (5) ayant un fond (6) et à l'opposé du fond (6) une ouverture (7) destinée à être associée rigidement, respectivement associée rigidement, à la deuxième pièce (2) à l'opposé de son ouverture d'extrémité (3), et une paroi latérale souple (20) pouvant se trouver dans deux états extrêmes, respectivement plié à plat et déployé, et dans tout état intermédiaire, et être déformée pour passer d'un état à un autre.

16. Ensemble selon la revendication 15, **caractérisé par le fait que** le récipient (4) comporte de façon intégrée des moyens (21) de traitement de son contenu.

17. Ensemble selon l'une quelconque des revendications 15 et 16, en ce que la revendication 16 dépend de la revendication 8, **caractérisé par le fait que** la deuxième pièce (2) formant port (2a) constitue en outre des moyens de protection des moyens (21) de traitement, leur partie interne active étant essentiellement disposée dans l'espace interne de la deuxième pièce (2) formant port (2a) lorsque la poche (5) est à l'état plié à plat, la partie périphérique de l'espace interne de la deuxième pièce (2) formant port (2a) formant une chambre de protection de la poche (5) et des moyens (21) de traitement.

18. Ensemble selon l'une quelconque des revendications 16 et 17, **caractérisé par le fait que** les moyens (21) de traitement sont disposés au moins pour partie à l'intérieur de la poche (5) en étant adjacents à son fond (6), à l'opposé de la deuxième pièce (2) formant port (2a).

19. Ensemble selon l'une quelconque des revendications 13 et 14, **caractérisé par le fait que** la deuxième pièce (2) est un tube.

20. Ensemble selon l'une quelconque des revendications 13 à 19, dans lequel la paroi transversale (14) est continue et pleine, la première pièce (1) étant d'obturation de la deuxième pièce (2).

21. Ensemble selon l'une quelconque des revendications 13 à 19, dans lequel la paroi transversale (14) comporte au moins un orifice de passage (23), la première pièce (1) étant de raccord avec communication à la deuxième pièce (2).

22. Ensemble selon la revendication 21, **caractérisé par le fait qu'**il comporte une troisième pièce (27) comprenant une partie extrême annulaire (26) raccordée de façon rigide et étanche à la première pièce (1), directement ou par l'intermédiaire de la pièce tubulaire (24) et, en outre, en particulier, une pièce de fermeture (30) associée à la troisième pièce (27), le cas échéant à la pièce tubulaire (24), ayant pour fonction d'ouvrir ou de fermer le passage formé par la partie extrême annulaire (26).

23. Procédé de montage ou assemblage de la première pièce de montage (1) à et sur la deuxième pièce (2) d'un ensemble selon l'une quelconque des revendications 13 à 22, dans lequel :
∘ on dispose d'une première pièce (1) et d'une deuxième pièce (2) non montées ou assemblées l'une avec l'autre, l'enceinte de maintien (45) de la première pièce (1) étant à l'état rétracté;
∘ on positionne la première pièce (1) au regard et dans l'axe de la deuxième pièce (2);
∘ on enfile la jupe (15) sur la collerette (8), et on positionne axialement la première pièce (1) sur la deuxième pièce (2);
∘ dans cette position, on fait passer l'enceinte de maintien (45) de la première pièce (1) de l'état rétracté à l'état expansé;
∘ de sorte que, dans cette situation où la première pièce (1), à l'état actif, est montée ou assemblée sur la deuxième pièce (2), la partie conjuguée (47a) de la face interne de l'enceinte de maintien (45) vient au contact avec serrage de maintien et étanchéité sur la partie conjuguée de la face extérieure (10b) de la collerette (8) de la deuxième pièce (2).

24. Procédé de désassemblage de la première pièce de montage (1) de la deuxième pièce (2) d'un ensemble selon l'une quelconque des revendications 13 à 22, dans lequel :
∘ on dispose d'une première pièce (1) et d'une deuxième pièce (2) montées ou assemblées l'une avec et sur l'autre, l'enceinte de maintien (45) de la première pièce (1) étant à l'état expansé;
∘ on fait passer l'enceinte de maintien (45) de la première pièce (1) de l'état expansé à l'état rétracté;
∘ on désenfile la première pièce (1) de la deuxième pièce (2), jusqu'à ce que les deux pièces (1, 2), soient désassemblées.

25. Procédé de mise en oeuvre d'un ensemble selon la revendication 20 en ce qu'elle dépend des revendications 15 à 18, dans lequel :
∘ on dispose d'un récipient de stockage ou de traitement (4) ;
∘ on part d'une situation dans laquelle :
▪ la poche (5) du récipient (4) est à l'état plié à plat,
▪ l'ouverture d'extrémité (3) du port (2a) du récipient (4) formant la deuxième pièce (2) est occulté par la première pièce (1) disposée vers le haut et montée sur et assemblée à la deuxième pièce (2), et
▪ la poche (5) est placée par son fond sur le fond du conteneur (19);
∘ un orifice d'introduction (22) de produit du récipient (4) étant ouvert, on introduit progressivement dans le récipient (4) un produit et simultanément on laisse la poche (5) se déployer vers le haut et être mise en volume par le conteneur (19), jusqu'à avoir introduit dans le récipient (4) la quantité souhaitée du produit ;
∘ on désassemble la première pièce (1) de la deuxième pièce (2) et on ouvre ainsi l'ouverture d'extrémité (3) de la deuxième pièce (2);
∘ cette ouverture d'extrémité (3) de la deuxième pièce (2) étant ainsi ouverte, on introduit par celle-ci, dans la poche (5), un produit et/ou un moyen de traitement et/ou de mesure du contenu de la poche (5) et, une fois cette dernière étape terminée,
∘ on monte ou assemble la première pièce (1) à et sur la deuxième pièce (2).

26. Procédé selon la revendication 25, dans lequel le récipient (4) comporte de façon intégrée des moyens (21) de traitement comprenant des moyens de mélange disposés à l'intérieur de la poche (5) en étant adjacents à son fond (6), dans lequel :
∘ l'ouverture d'extrémité (3) du port (2a) du récipient (4) formant la deuxième pièce (2) étant occulté par la première pièce (1) et un orifice (22) d'introduction de produit du récipient étant ouvert, on introduit dans le récipient (4) la quantité souhaitée d'un produit ;
∘ on désassemble la première pièce (1) de la deuxième pièce (2) et on ouvre ainsi l'ouverture d'extrémité (3) de la deuxième pièce (2);
∘ cette ouverture d'extrémité (3) de la deuxième pièce (2) étant ainsi ouverte, on introduit par celle-ci, dans la poche (5), une quantité souhaitée d'un produit ;
∘ on met en oeuvre les moyens (21) de mélange ;
∘ on monte ou assemble la première pièce (1) à et sur la deuxième pièce (2);
∘ et on poursuit la mise en oeuvre des moyens (21) de mélange.

27. Procédé de mise en oeuvre d'un ensemble selon la revendication 22 en ce qu'elle dépend des revendications 15 à 18, dans le cas où la troisième pièce (27) est une poche ouverte à l'opposé de sa partie extrême annulaire (26), en vue d'insérer un produit P dans le récipient (4) via la troisième pièce (poche ouverte 27), dans lequel :
∘ on dispose d'un récipient (4) de stockage ou de traitement comprenant une poche (5) et d'une troisième pièce (poche ouverte 27) raccordée de façon rigide et étanche à la première pièce (1) ;
∘ on associe une pièce de fermeture (30) à la partie extrême (26) de la troisième pièce (poche ouverte 27) et on la manoeuvre pour fermer le passage formé par la partie extrême annulaire (26) ;
∘ la troisième pièce (poche ouverte 27) étant ouverte à l'opposé de sa partie extrême annulaire (26) ainsi fermée, on introduit par celle-ci, dans cette troisième pièce (poche 27), la quantité souhaitée du produit P;
∘ on ferme l'ouverture de la troisième pièce (poche 27) à l'opposé de sa partie extrême annulaire fermée (26);
∘ on monte ou assemble la première pièce (1) à et sur la deuxième pièce (2), aucune communication n'existant alors entre la poche (5) du récipient (4) de stockage ou de traitement et la troisième pièce (poche 27);
∘ lorsque souhaité, on manoeuvre la pièce de fermeture (30) pour ouvrir le passage formé par la partie extrême annulaire (26), une communication étant alors établie entre la poche (5) du récipient (4) de stockage ou de traitement et la troisième pièce (poche 27);
∘ on fait passer le produit inséré dans la troisième pièce (poche 27) dans la poche (5) du récipient de stockage ou de traitement (4).

28. Procédé de mise en oeuvre d'un ensemble selon la revendication 22 en ce qu'elle dépend des revendications 15 à 18, dans le cas où la troisième pièce (27) est une poche fermée à l'opposé de sa partie extrême annulaire (26), en vue d'insérer un produit P dans le récipient (4) via la troisième pièce (poche fermée 27), dans lequel :
∘ on dispose d'un récipient (4) de stockage ou de traitement comprenant une poche (5) et d'une troisième pièce (poche fermée 27) raccordée de façon rigide et étanche à la première pièce (1) ;
∘ la troisième pièce (poche (27) étant ouverte à sa partie extrême annulaire (26), on introduit par celle-ci, dans cette troisième pièce (poche (27), la quantité souhaitée du produit P ;
∘ on associe une pièce de fermeture (30) à la partie extrême (26) de la troisième pièce (poche 27) et on la manoeuvre pour fermer le passage formé par la partie extrême annulaire (26);
∘ on monte ou assemble la première pièce (1) à et sur la deuxième pièce (2), aucune communication n'existant alors entre la poche (5) du récipient (4) de stockage ou de traitement et la troisième pièce (poche 27) renfermant le produit P;
∘ lorsque souhaité, on manoeuvre la pièce de fermeture (30) pour ouvrir le passage formé par la partie extrême annulaire (26), une communication étant alors établie entre la poche (5) du récipient (4) de stockage ou de traitement et la troisième pièce (poche 27) ;
∘ on fait passer le produit P inséré dans la troisième pièce (poche 27) dans la poche (5) du récipient (4) de stockage ou de traitement.

## Patentansprüche

1. Teil (erstes Teil 1), das speziell dazu bestimmt ist, stationär und starr, abnehmbar und dicht auf einen ringförmigen starren Kragen (8) eines zweiten Teils (2), das eine Endöffnung (3) hat, montiert zu werden, wobei das erste Teil (1) mit der Achse XX:
a. eine Querwand (14) umfasst, die geeignet ist, in die Öffnung (3) zu kommen,
∘ eine ringförmige Wand umfasst, die eine Schürze (15) bildet, die eine Innenseite (15a) hat, die keine oder nur eine geringe Verbreiterungskapazität unter einer äußeren Aktion in die Verbreiterungsrichtung hat,
∘ einen torischen hohlen Halteeinschluss (45), der zu der Innenseite (15a) der Schürze (15) benachbart ist und zu deren Innerem liegt, der zwischen einem eingezogenen Zustand, in dem er auf sich selbst abgeflacht ist, und einem ausgedehnten Zustand, in dem er aufgerichtet ist und mit einem Aufblasfluid, das gering komprimierbar ist, gefüllt ist, verformbar ist, mindestens einen Eingangs-/Ausgangsanschluss (46) des Aufblasfluids in Fluidverbindung mit dem Halteeinschluss (45) und von außerhalb der Schürze (15) her zugänglich, geeignet, um das Eintreten oder Austreten des Aufblasfluids in den torischen Halteeinschluss (45) zu erlauben, und ein Ventil (52), das außerhalb der Schürze (15) liegt, umfasst,
∘ dessen Maße in Bezug zu denen des Kragens (8) derart ausgewählt sind, dass es geeignet ist, wenn der Halteeinschluss (45) in dem zurückgezogenen Zustand ist, auf das zweite Teil (2) aufgezogen oder von ihm abgezogen zu werden, und, wenn der Halteeinschluss (45) im ausgedehnten Zustand ist, stationär und starr und dicht auf den Kragen (8) montiert zu werden, wobei das zugeordnete Teil (47a) der Innenseite (47) des Halteeinschlusses (45) unter Haltespannung auf das zugeordnete Teil (10b) der Außenseite (10) des Kragens (8) in Berührung ist,
**dadurch gekennzeichnet, dass**:
° die Querwand (14) mit intrinsischer Abdichtung entweder durchgehend und massiv ist, oder mindestens eine Durchgangsöffnung (23) umfasst,
∘ die Innenseite (15a) der Schürze (15) Folgendes umfasst:
• einen Teil mit zylindrischer Form (39a) mit größerem Durchmesser, an die Querwand (14) angrenzend,
• einen Teil mit zylindrischer Form (39b) mit kleinerem Durchmesser, axial von der Querwand (14) beabstandet, zwischen dessen axialen Endteilen (49, 50) eine ringförmige Hohlkehle (48) eingerichtet ist, wobei der torische Halteeinschluss (45) durch die ringförmige Hohlkehle (48) gehalten und in ihr mindestens teilweise aufgenommen ist, wobei die Schürze (15) den Halteeinschluss (45) trägt,
• und einen Verbindungszwischenteil (39c) mit kegelstumpfartiger Form, das an das Teil (39a) mit größerem Durchmesser und an das Teil (39b) mit kleinerem Durchmesser angrenzt,
∘ wobei die Innenseite (15a) der Schürze (15) eine komplementäre Form zu der Seite (10) des Kragens (8) hat, abgesehen von der ringförmigen Hohlkehle (48), wobei das Zwischenteil (39c) unter Haltespannung auf das zugeordneten Teil (10c) der Seite (10) zur Berührung kommt, wobei das erste Teil (1) insgesamt genommen durch Biegen für sein Aufziehen auf und Abziehen von dem zweiten Teil (2) verformt werden kann,
∘ wobei das erste Teil (1) aus einem Werkstoff hergestellt ist, der an das biopharmazeutische Gebiet angepasst ist, Gebiet, für das das erste Teil (1) mit schnellem stationären und starren und dichten Platzieren und Entfernen speziell bestimmt ist, das zweite Teil (2) verschließt, wenn die Querwand (14) durchgehend und massiv ist, oder in Verbindung an das zweite Teil (2) anschließt, wenn die Querwand (14) eine Durchgangsöffnung (23) umfasst.

2. Montageteil (1) nach Anspruch 1, **dadurch gekennzeichnet, dass** der torische Halteeinschluss (45) ein getrenntes Teil der Schürze (15) ist, das auf sie angebaut ist, die ringförmige Hohlkehle (48) mit mindestens teilweise zu der des torischen Halteeinschlusses (45) komplementärer Form eine Öffnung (51) hat, die in der Innenseite (15a) der Schürze (15) liegt, das zugeordnete Teil (47a) des Halteeinschlusses (45) radial gerade zu der Öffnung (51) der Hohlkehle (48) liegt, der mindestens einen Eingangs-/Ausgangsanschluss (46), der die Schürze (15) in ihrem Teil (39b) mit kleinerem Durchmesser von ihrer Innenseite (15a) durchquert.

3. Montageteil (1) nach einem der Ansprüche 1 und 2, **dadurch gekennzeichnet, dass** die Schürze (15) einerseits eine gleiche radiale Stärke oder ähnliche radiale Stärken gerade zu dem Teil (39a) mit größerem Durchmesser und gerade zu dem Teil (39b) mit kleinerem Durchmesser gerade zu dem torischen Halteeinschluss (45) hat, und andererseits eine größere radiale Stärke gerade zu seinen axialen Endteilen (49, 50) mit kleinerem Durchmesser, wobei der Innendurchmesser des zugeordneten Teils (47a) der Innenseite (47) des Halteeinschlusses (45) im ausgedehnten Zustand gleich oder leicht kleiner ist als der Innendurchmesser des Teils (39b) mit kleinerem Durchmesser der Schürze (15) radial gerade zu seinen axialen Endteilen (49, 50) mit kleinerem Durchmesser.

4. Montageteil (1) nach einem der Ansprüche 1 bis 3, **dadurch gekennzeichnet, dass** das Zwischenteil (39c) der Innenseite (15a) der Schürze (15) eine Kegelstumpfform hat, die mit der Achse XX einen Neigungswinkel in der Größenordnung von 45 Grad bildet.

5. Montageteil (1) nach einem der Ansprüche 1 bis 4, in dem Fall, in dem die Querwand (14) eine Durchgangsöffnung (23) umfasst, **dadurch gekennzeichnet, dass** es außerdem ein rohrförmiges Teil (24) umfasst, das die Öffnung (23) abgrenzt, das fest mit der Querwand (14) verbunden ist, um eine starre Baugruppe zu bilden, die sich von der Querwand (14) nach außen und/oder nach innen erstreckt, wobei das erste Montageteil (1), das mit dem rohrförmigen Teil (24) versehen ist, eine Anschluss- und starre Befestigungs- und Passage- oder Transferfunktion sicherstellt, wobei das rohrförmige Teil (24), das sich von der Querwand (14) nach außen erstreckt, geeignet ist, um das ringförmige Endteil (26) eines dritten Teils (27) aufzunehmen und starr und dicht zu befestigen.

6. Montageteil (1) nach Anspruch 5, **gekennzeichnet durch** ein rohrförmiges Teil (24), das sich von der Querwand (14) nach außen erstreckt, das eine rohrförmige Wand (40) zur Aufnahme und starren und dichten Befestigung des ringförmigen Endteils (26) des dritten Teils (27) und an einem Ende der rohrförmigen Wand (40) einen Kragen (32) zum starren Befestigen an das Teil (34) der Querwand (14), die den Rand der Öffnung (23) bildet, umfasst, und/oder von der rohrförmigen Wand (40) nach außen eine äußere zylindrische Wand (28) umfasst, die mit der Wand (40) eine ringförmige zylindrische Aufnahme (28a) bildet, die geeignet ist, das ringförmige Endteil (26) des dritten Teils (27) aufzunehmen und insbesondere einen Querkragen (25) umfasst, der eine starre Einheit mit ihr bildet, der nach außen gerichtet ist, der geeignet ist, ein Aufhängmittel des dritten Teils (27), das mit einer Stützwand (41), die mit einem Loch (42) versehen ist, zusammenwirkt.

7. Montageteil (1) nach einem der Ansprüche 1 bis 4, in dem Fall, in dem die Querwand (14) eine Durchgangsöffnung (23) umfasst, **gekennzeichnet durch** ein drittes Teil (27), das ein ringförmiges Endteil (26) hat, das geeignet ist, direkt an das Teil (34) der Querwand (14), das den Rand der Öffnung (23) bildet, befestigt zu werden oder daran befestigt ist.

8. Montageteil (1) nach einem der Ansprüche 4 bis 7, **gekennzeichnet durch** ein drittes Teil (27), das entweder die Form einer offenen Tasche oder nicht dem ringförmigen Endteil (26) entgegengesetzt oder eine Rohrform hat.

9. Montageteil (1) nach einem der Ansprüche 4 bis 8, **gekennzeichnet durch** ein Schließteil (30), das mit dem dritten Teil (27) verbunden ist, wobei das rohrförmige Teil (24) die Aufgabe hat, die Passage, die von dem ringförmigen Endteil (26) gebildet wird, zu öffnen oder zu schließen.

10. Montageteil (1) nach einem der Ansprüche 1 bis 9, **gekennzeichnet durch** ein erstes umfängliches ringförmiges Dichtmittel (16) in gerundeter Wulstform im geraden Querschnitt und in der Nähe der Schürze (15) liegend, und ein zweites umfängliches ringförmiges zugeordnetes Dichtmittel (12) in Form einer gerundeten Nut im geraden Querschnitt, eingerichtet auf der Endkante (11) des Kragens (8).

11. Montageteil (1) nach einem der Ansprüche 1 bis 10, **dadurch gekennzeichnet, dass** es außerdem mindestens eine äußere umfängliche Lasche (17) hat, die an den freien Rand (18) der Schürze (15) anschließt und in einem Stück mit ihr, die geeignet ist, zu dem Platzieren und/oder Entfernen des ersten Teils (1) auf und/oder von dem Kragen (8) des zweiten Teils (2) beizutragen.

12. Montageteil (1) nach einem der Ansprüche 1 bis 11, **dadurch gekennzeichnet, dass** die Querwand (14) und die Schürze (15) aus Silikon oder gleichwertigem Werkstoff hergestellt sind, und/oder dass der Halteeinschluss (45) aus Silikon oder gleichwertigem Werkstoff hergestellt ist, falls er mit einer Flüssigkeit aufgeblasen wird, oder aus Butyl oder gleichwertigem Werkstoff, wenn er mit einem Gas aufgeblasen wird, wobei das Butyl nach außen mit einem in dem biopharmazeutischen Gebiet akzeptablem Werkstoff, wie zum Beispiel mit Silikon oder Gleichwertigem, beschichtet ist, und insbesondere dadurch, dass die Bestandswerkstoffe des Montageteils (1) antistatisch sind.

13. Baugruppe, die speziell für das biopharmazeutische Gebiet bestimmt ist, die ein erstes Montageteil (1) nach einem der Ansprüche 1 bis 12 und ein zweites Teil (2), auf das es stationär und starr, abnehmbar und dicht montiert ist, umfasst, **dadurch gekennzeichnet, dass** das zweite Teil (2), das hohl ist, eine Endöffnung (3) umfasst, die durch einen starren ringförmigen Kragen (8) begrenzt ist, der auf der Seite der Öffnung (3) eine Schwellung (9), die nach außen gerichtet ist, hat, wobei die Außenseite (10) des Kragens (8) ein Teil (10a) mit größerem Durchmesser zu der Schwellung (9) und der Öffnung (3), ein Teil (10b) mit kleinerem Durchmesser, der von der Schwellung (9) und der Öffnung (3) beabstandet ist, und ein Zwischenteil (10c), derart umfasst, dass im aktiven Zustand, in dem das erste Teil (1) auf das zweite Teil (2) montiert ist, das zugeordnete Teil (47a) der Innenseite (47) des Halteeinschlusses (45) unter Haltespannung und Abdichtung auf dem zugeordneten Teil (10b) der Außenseite (10) des Kragens (8) des zweiten Teils (2) zur Berührung kommt, wobei das erste Teil (1) schnell auf/von dem zweiten Teil (2) platziert und entfernt werden kann.

14. Baugruppe nach Anspruch 13, **dadurch gekennzeichnet, dass** das zweite Dichtmittel (12), wie zum Beispiel eine ringförmige Nut, auf der Endkante (11) des Kragens (8), der die Schwellung (9) bildet, eingerichtet ist, mit der, wenn es vorgesehen ist, ein erstes umfängliches ringförmiges Dichtmittel (16) in gerundeter Wulstform mit geradem Querschnitt und in der Nähe der Schürze (15) liegend zusammenwirkt.

15. Baugruppe nach einem der Ansprüche 13 und 14, **dadurch gekennzeichnet, dass** das zweite Teil (2) ein Anschluss (2a) ist, der zu einem Lager- oder Behandlungsbehälter (4) gehört, der außerdem eine Tasche (5) umfasst, die einen Grund (6) und dem Grund (6) entgegengesetzt eine Öffnung (7) hat, die dazu bestimmt ist, starr, jeweils starr verbunden, mit dem zweiten Teil (2) entgegengesetzt zu seiner Endöffnung (3) verbunden zu sein, und eine biegsame Seitenwand (20), die sich in zwei Endzuständen befinden kann, jeweils flach gefaltet und ausgebreitet, und in jedem Zwischenzustand, und verformt werden kann, um von einem Zustand zu einem anderen überzugehen.

16. Baugruppe nach Anspruch 15, **dadurch gekennzeichnet, dass** der Behälter (4) integrierte Mittel (21) zum Behandeln seines Inhalts umfasst.

17. Baugruppe nach einem der Ansprüche 15 und 16, wobei Anspruch 16 von Anspruch 8 abhängt, **dadurch gekennzeichnet, dass** das zweite Teil (2), das den Anschluss (2a) bildet, außerdem Schutzmittel der Behandlungsmittel (21) bildet, wobei ihr innerer aktiver Teil im Wesentlichen in dem Innenraum des zweiten Teils (2), das den Anschluss (2a) bildet, angeordnet ist, wenn die Tasche (5) im flach gefalteten Zustand ist, wobei der umfängliche Teil des Innenraums des zweiten Teils (2), das den Anschluss (2a) bildet, eine Schutzkammer der Tasche (5) und der Behandlungsmittel (21) bildet.

18. Baugruppe nach einem der Ansprüche 16 und 17, **dadurch gekennzeichnet, dass** die Behandlungsmittel (21) mindestens zum Teil im Inneren der Tasche (5) an ihrem Grund (6) benachbart, dem zweiten Teil (2), das den Anschluss (2a) bildet, entgegengesetzt, angeordnet sind.

19. Baugruppe nach einem der Ansprüche 13 und 14, **dadurch gekennzeichnet, dass** das zweite Teil (2) ein Rohr ist.

20. Baugruppe nach einem der Ansprüche 13 bis 19, wobei die Querwand (14) durchgehend und massiv ist, wobei das erste Teil (1) ein Schließteil des zweiten Teils (2) ist.

21. Baugruppe nach einem der Ansprüche 13 bis 19, wobei die Querwand (14) mindestens eine Durchgangsöffnung (23) umfasst, wobei das erste Teil (1) in Verbindung an das zweite Teil (2) anschließt.

22. Baugruppe nach Anspruch 21, **dadurch gekennzeichnet, dass** sie ein drittes Teil (27), das ein ringförmigen Endteil (26) umfasst, das starr und dicht an das erste Teil (1) direkt oder über das rohrförmige Teil (24) angeschlossen ist, und außerdem insbesondere ein Schließteil (30), das mit dem dritten Teil (27) verbunden ist, gegebenenfalls mit dem rohrförmigen Teil (24), das die Aufgabe hat, die Passage, die von dem ringförmigen Endteil (26) gebildet wird, zu öffnen oder zu schließen, umfasst.

23. Verfahren zur Montage oder zum Zusammenfügen des ersten Montageteils (1) an und auf das zweite Teil (2) einer Baugruppe nach einem der Ansprüche 13 bis 22, wobei:
° man über ein erstes Teil (1) und ein zweites Teil (2), die nicht aneinander montiert oder zusammengefügt sind, verfügt, wobei der Halteeinschluss (45) des ersten Teils (1) im zurückgezogenen Zustand ist,
∘ man das erste Teil (1) gegenüber und in der Achse des zweiten Teils (2) anordnet,
∘ man die Schürze (15) auf den Kragen (8) aufzieht und das erste Teil (1) axial auf dem zweiten Teil (2) positioniert,
∘ man in dieser Position den Halteeinschluss (45) des ersten Teils (1) von dem eingezogenen zu dem aufgeweiteten Zustand übergehen lässt,
∘ so dass in dieser Situation, in der das erste Teil (1) im aktiven Zustand auf das zweite Teil (2) montiert oder mit diesem zusammengefügt ist, das zugeordnete Teil (47a) der Innenseite des Halteeinschlusses (45) unter Haltespannung und Abdichtung auf das zugeordnete Teil der Außenseite (10b) des Kragens (8) des zweiten Teils (2) zur Berührung kommt.

24. Verfahren zum Auseinandernehmen des ersten Montageteils (1) von dem zweiten Teil (2) einer Baugruppe nach einem der Ansprüche 13 bis 22, wobei:
∘ man über ein erstes Teil (1) und ein zweites Teil (2), die aneinander montiert oder zusammengefügt sind, verfügt, wobei der Halteeinschluss (45) des ersten Teils (1) im aufgeweiteten Zustand ist,
∘ man den Halteeinschluss (45) des ersten Teils (1) von dem aufgeweiteten Zustand auf den eingezogenen Zustand übergehen lässt,
∘ man das erste Teil (1) von dem zweiten Teil (2) abzieht, bis die zwei Teile (1, 2) auseinandergenommen sind.

25. Verfahren zur Umsetzung einer Baugruppe nach Anspruch 20, **dadurch gekennzeichnet, dass** es von den Ansprüchen 15 bis 18 abhängt, wobei:
∘ man über einen Lager- oder Behandlungsbehälter (4) verfügt,
∘ man von einer Situation ausgeht, in der:
◆ die Tasche (5) des Behälters (4) im flach gefalteten Zustand ist,
◆ die Endöffnung (3) des Anschlusses (2a) des Behälters (4), der das zweite Teil (2) bildet, von dem ersten Teil (1) verdeckt wird, das nach oben und auf das zweite Teil (2) montiert und mit diesem zusammengefügt angeordnet ist, und
◆ die Tasche (5) mit ihrem Grund auf dem Grund eines Containers (19) platziert ist,
∘ während eine Einführöffnung (22) von Produkt des Behälters (4) offen ist, man allmählich in den Behälter (4) ein Produkt einführt und gleichzeitig die Tasche (5) sich nach oben ausbreiten und durch den Container (19) aufrichten lässt, bis man in den Behälter (4) die gewünschte Menge des Produkts eingeführt hat,
∘ man das erste Teil (1) von dem zweiten Teil (2) abmontiert und daher die Endöffnung (3) des zweiten Teils (2) öffnet,
∘ wenn diese Endöffnung (3) des zweiten Teils (2) daher offen ist, man durch sie in die Tasche (5) ein Produkt und/oder ein Behandlungsmittel und/oder ein Messmittel des Inhalts der Tasche (5) einführt, und, sobald dieser letzte Schritt abgeschlossen ist,
∘ man das erste Teil (1) an und auf das zweite Teil (2) montiert oder mit diesem zusammenfügt.

26. Verfahren nach Anspruch 25, wobei der Behälter (4) integrierte Behandlungsmittel (21) umfasst, die Mischmittel umfassen, die im Inneren der Tasche (5) angeordnet sind, wobei sie neben ihrem Grund (6) liegen, wobei:
° während die Endöffnung (3) des Anschlusses (2a) des Behälters (4), der das zweite Teil (2) bildet, durch das erste Teil (1) verschlossen ist und eine Produkteinführöffnung (22) offen ist, man in den Behälter (4) die gewünschte Menge eines Produkts einführt,
∘ man das erste Teil (1) von dem zweiten Teil (2) abmontiert und daher die Endöffnung (3) des zweiten Teils (2) öffnet,
∘ während diese Endöffnung (3) des zweiten Teils (2) daher geöffnet ist, man durch sie in die Tasche (5) eine gewünschte Menge eines Produkts einführt,
∘ man die Mischmittel (21) anwendet,
∘ man das erste Teil (1) an und auf das zweite Teil (2) montiert oder mit diesem zusammenfügt,
∘ und man die Anwendung der Mischmittel (21) fortsetzt.

27. Verfahren zum Umsetzen einer Baugruppe nach Anspruch 22, abhängig von den Ansprüchen 15 bis 18, in dem Fall, in dem das dritte Teil (27) eine Tasche ist, die an der entgegengesetzten Seite ihres ringförmigen Endteils (26) offen ist, um ein Produkt P in den Behälter (4) über das dritte Teil (offene Tasche 27) einzuführen, wobei:
∘ man über einen Lager- oder Behandlungsbehälter (4) verfügt, der eine Tasche (5) umfasst, und über ein drittes Teil (offene Tasche 27), das starr und dicht an dem ersten Teil (1) angeschlossen ist,
∘ man ein Schließteil (30) mit dem Endteil (26) des dritten Teils (offene Tasche 27) verbindet, um die Passage, die von dem ringförmigen Endteil (26) gebildet wird, zu schließen,
∘ während das dritte Teil (offene Tasche 27) entgegengesetzt zu seinem ringförmigen Endteil (26), das so verschlossen wird, offen ist, man durch dieses in das dritte Teil (Tasche 27) die gewünschte Menge des Produkts P einführt,
∘ man die Öffnung des dritten Teils (Tasche 27) entgegengesetzt zu ihrem geschlossenen ringförmigen Endteil (26) schließt,
∘ man das erste Teil (1) an und auf das zweite Teil (2) montiert oder mit diesem zusammenfügt, wobei keine Verbindung zwischen der Tasche (5) des Lager- oder Behandlungsbehälters (4) und dem dritten Teil (Tasche 27) existiert,
∘ man nach Wunsch das Schließteil (30) betätigt, um die Passage zu öffnen, die von dem ringförmigen Endteil (26) gebildet wird, wobei eine Verbindung zwischen der Tasche (5) des Lager- oder Behandlungsbehälters (4) und dem dritten Teil (Tasche 27) hergestellt wird,
∘ man das in das dritte Teil (Tasche 27) eingefügte Produkt in die Tasche (5) des Lager- oder Behandlungsbehälters (4) übergehen lässt.

28. Verfahren zum Umsetzen einer Baugruppe nach Anspruch 22, abhängig von den Ansprüchen 15 bis 18, in dem Fall, in dem das dritte Teil (27) eine Tasche ist, die entgegengesetzt zu ihrem ringförmigen Endteil (26) geschlossen ist, um ein Produkt P in den Behälter (4) über das dritte Teil (geschlossene Tasche 27) einzuführen, wobei:
∘ man über einen Lager- oder Behandlungsbehälter (4), der eine Tasche (5) umfasst, verfügt, und ein drittes Teil (geschlossene Tasche 27), das starr und dicht an das erste Teil (1) angeschlossen ist,
∘ während das dritte Teil (Tasche 27) an seinem ringförmigen Endteil (26) offen ist, man durch dieses in dieses dritte Teil (Tasche 27) die gewünschte Menge des Produkts P einführt,
∘ man ein Schließteil (30) mit dem Endteil (26) des dritten Teils (Tasche 27) verbindet und betätigt, um die Passage, die von dem ringförmigen Endteil (26) gebildet wird, zu schließen,
∘ man das erste Teil (1) an und auf dem zweiten Teil (2) montiert oder mit diesem zusammenfügt, wobei keine Verbindung zwischen der Tasche (5) des Lager- oder Behandlungsbehälters (4) und dem dritten Teil (Tasche 27), die das Produkt P einschließt, besteht,
∘ man nach Wunsch das Schließteil (30) betätigt, um die Passage zu öffnen, die von dem ringförmigen Endteil (26) gebildet wird, wodurch eine Verbindung zwischen der Tasche (5) des Lager- oder Behandlungsbehälters (4) und dem dritten Teil (Tasche 27) hergestellt wird,
∘ man das Produkt P, das in das dritte Teil (Tasche 27) in der Tasche (5) des Lager- oder Behandlungsbehälters (4) eingefügt ist, übergehen lässt.

## Claims

1. Piece (first piece 1) specially adapted to be detachably and sealingly mounted in a fixed and rigid manner on a rigid annular collar (8) of a second piece (2) having an end opening (3), the first piece (1), of axis XX:
a. comprising a transverse wall (14) adapted to come into the opening (3);
∘ comprising an annular wall forming a skirt (15), having an inner face (15a), having no or little capacity for expansion when subjected to external action in the expansion direction;
∘ comprising: a toric holding chamber (45), which is hollow, adjacent to the inner face (15a) of the skirt (15) and located inwardly thereof, deformable between a retracted state in which it is flattened against itself and an expanded state in which it is three-dimensional and filled with a swelling medium of low compressability; at least one inlet/outlet port (46) for the swelling medium, in fluid communication with the holding chamber (45) and accessible from outside the skirt (15), adapted to permit the entry or exit of swelling medium in the toric holding chamber (45); and a valve (52) located outside of the skirt (15);
∘ having dimensions chosen, relative to those of the collar (8), so as to be suitable for threading onto or unthreading from the second piece (2) when the holding chamber (45) is in the retracted state, and when the holding chamber (45) is in the expanded state, to be sealingly mounted in a fixed and rigid manner on the collar (8), the mating portion (47a) of the inner face (47) of the holding chamber (45) engaging in a clamping and retaining manner on the mating portion (10b) of the outer face (10) of the collar (8);
**characterized in that**:
∘ the transverse wall (14), inherently fluidtight, is either continuous and solid or comprises at least one through-opening (23);
∘ the inner face (15a) of the skirt (15) comprises:
• a cylindrical portion (39a) of larger diameter, adjoining the transverse wall (14),
• a cylindrical portion (39b) of smaller diameter, axially more distant from the transverse wall (14), between the axial end portions (49, 50) of which is formed an annular groove (48), the toric holding chamber (45) being held by and at least partially housed in the annular groove (48), the skirt (15) supporting the holding chamber (45),
• and an intermediate connecting portion (39c) of frustoconical shape, between the portion (39a) of larger diameter and the portion (39b) of smaller diameter;
∘ the inner face (15a) of the skirt (15) has a shape that is complementary to the face (10) of the collar (8), apart from the annular groove (48), the intermediate portion (39c) engaging in a clamping and retaining manner on the mating portion (10c) of face (10), the first piece (1) being deformable as a whole in order to bend for threading onto and unthreading from the second piece (2);
∘ the first piece (1) being made of a material suitable for the biopharmaceutical field, a field for which the first piece (1) is specially adapted for rapid positioning in a fluidtight fixed and rigid manner and for rapid removal, being sealed off from the second piece (2) when the transverse wall (14) is continuous and solid, or having a connecting communicating with the second piece (2) when the transverse wall (14) has a through-opening (23).

2. Mounting piece (1) according to claim 1, wherein the toric holding chamber (45) is a separate piece from the skirt (15) but attached thereto, the annular groove (48), of a shape at least partially complementary to that of the toric holding chamber (45), having an opening (51) in the inner face (15a) of the skirt (15), the mating portion (47a) of the holding chamber (45) being radially positioned in line with the opening (51) of the groove (48), the at least one inlet/outlet port (46) passing through the skirt (15) through its portion (39b) of smaller diameter of its inner face (15a).

3. Mounting piece (1) according to either of claims 1 and 2, wherein the skirt (15) has, firstly, the same radial thickness or similar radial thicknesses in line with the portion (39a) of larger diameter and in line with the portion (39b) of smaller diameter in line with the toric holding chamber (45), and secondly, a greater radial thickness in line with its axial end portions (49, 50) of smaller diameter, the inside diameter of the mating portion (47a) of the inner face (47) of the holding chamber (45) in the expanded state being equal to or slightly smaller than the inside diameter of the portion (39b) of smaller diameter of the skirt (15) radially in line with its axial end portions (49, 50) of smaller diameter.

4. Mounting piece (1) according to any one of claims 1 to 3, wherein the intermediate portion (39c) of the inner face (15a) of the skirt (15) has a frustoconical shape, forming with axis XX an angle of inclination of about 45°.

5. Mounting piece (1) according to any one of claims 1 to 4 in the case where the transverse wall (14) comprises a through-opening (23), wherein it further comprises a tubular part (24) delimiting the opening (23), secured to the transverse wall (14) so as to form a rigid assembly extending outwardly and inwardly of the transverse wall (14), the first piece (1) provided with the tubular part (24) performing a function of rigid attachment and connection and of passage or transfer, the tubular part (24) extending outwardly of the transverse wall (14) being adapted for receiving and for rigid and fluidtight attachment of the annular end portion (26) of a third piece (27).

6. Mounting piece (1) according to claim 5, **characterized by** a tubular part (24) extending outwardly of the transverse wall (14), comprising a tubular wall (40) for receiving and for the rigid and fluidtight attachment of the annular end portion (26) of the third piece (27) and at one end of the tubular wall (40), a collar (32) for rigid attachment to the portion (34) of the transverse wall (14) forming the edge of the opening (23), forming with the wall (40) an annular cylindrical housing (28a) suitable for receiving the annular end portion (26) of the third piece (27) and, in particular, comprising, and forming a rigid assembly with it, a transverse collar (25) directed outwardly, adapted to form a means of suspension of the third piece (27), engaging with a support wall (41) provided with a hole (42).

7. Mounting piece (1) according to any one of claims 1 to 4, in the case where the transverse wall (14) comprises a through-opening (23), **characterized by** a third piece (27) having an annular end portion (26) which is adapted to be, or is, attached directly to the portion (34) of the transverse wall (14) forming the edge of the opening (23).

8. Mounting piece (1) according to any one of claims 4 to 7, **characterized by** a third piece (27) having either a pouch shape, possibly open opposite the annular end portion (26), or a tube shape.

9. Mounting piece (1) according to any one of claims 4 to 8, **characterized by** a closure part (30) associated with the third piece (27), where appropriate the tubular part (24), having the function of opening or closing the passage formed by the annular end portion (26).

10. Mounting piece (1) according to any one of claims 1 to 9, **characterized by** a first annular peripheral sealing means (16) in the form of a bead having a rounded cross-section and located close to the skirt (15), and a second mating annular peripheral sealing means (12) in the form of a groove having a rounded cross-section, provided in the end rim (11) of the collar (8).

11. Mounting piece (1) according to any one of claims 1 to 10, **characterized in that** it further comprises at least one outer peripheral tongue (17) adjacent to the free edge (18) of the skirt (15) and of one piece with it, able to contribute to the placement and/or removal of the first piece (1) onto and/or from the collar (8) of the second piece (2).

12. Mounting piece (1) according to any one of claims 1 to 11, wherein the transverse wall (14) and the skirt (15) are made of silicone or equivalent material and/or wherein the holding chamber (45) is made of silicone or equivalent material if it is inflated with a liquid or of butyl or equivalent material if it is inflated with a gas, the butyl being externally coated by a material that is acceptable for the biopharmaceutical field, such as silicone or equivalent, and in particular wherein the component materials of the mounting piece (1) are antistatic.

13. Assembly, specially adapted for the biopharmaceutical field, comprising a first assembly piece (1) according to any one of claims 1 to 12 and a second piece (2) on which it is detachably and sealingly mounted in a fixed and rigid manner, **characterized by** the fact that the second piece (2), which is hollow, has an end opening (3) defined by a rigid annular collar (8) having, on the side of the opening (3), an outwardly directed bulge (9), the outer face (10) of the collar (8) comprising a portion (10a) of larger diameter toward the bulge (9) and the opening (3), a portion (10b) of smaller diameter further away from the bulge (9) and the opening (3), and an intermediate portion (10c), such that, in the active state where the first piece (1) is mounted on the second piece (2), the mating portion (47a) of the inner face (47) of the holding chamber (45) engages in a fluidtight clamping and retaining manner on the mating portion (10b) of the outer face (10) of the collar (8) of the second piece (2), the first piece (1) being rapid to install on and remove from the second piece (2).

14. Assembly according to claim 13, wherein the second sealing means (12), such as an annular groove, is provided in the end rim (11) of the collar (8) forming the bulge (9), which engages with, when provided, a first annular peripheral sealing means (16) in the form of a bead having a rounded cross-section and located close to the skirt (15).

15. Assembly according to either of claims 13 and 14, wherein the second piece (2) is a port (2a) which is part of a container (4) for storage or processing, further comprising a pouch (5) having a bottom (6) and an opening (7) opposite to the bottom (6) that is intended to be respectively rigidly associated with the second piece (2) opposite to its end opening (3), and a flexible side wall (20) which can be in two extreme states, folded flat or deployed, and in any intermediate state, and can be deformed to change from one state to another.

16. Assembly according to claim 15, wherein the container (4) comprises integrated means (21) for processing its contents.

17. Assembly according to either of claims 15 and 16, claim 16 being dependent on claim 8, wherein the second piece (2) forming the port (2a) further constitutes protection means for the processing means (21), their active inner portion being substantially arranged within the inner space of the second piece (2) forming the port (2a) when the pouch (5) is in the folded flat state, the peripheral portion of the inner space of the second piece (2) forming the port (2a) forming a protective chamber for the pouch (5) and processing means (21).

18. Assembly according to either of claims 16 and 17, wherein the processing means (21) are arranged at least partly inside the pouch (5), being adjacent to its bottom (6) and opposite to the second piece (2) forming the port (2a).

19. Assembly according to either of claims 13 and 14, wherein the second piece (2) is a tube.

20. Assembly according to any one of claims 13 to 19, wherein the transverse wall (14) is continuous and solid, the first piece (1) closing the second piece (2).

21. Assembly according to any one of claims 13 to 19, wherein the transverse wall (14) comprises at least one through-opening (23), the first piece (1) having a connecting communication with the second piece (2).

22. Assembly according to claim 21, comprising a third piece (27) comprising an annular end portion (26) connected in a rigid and fluidtight manner to the first piece (1), directly or by means of the tubular part (24), and further comprising, in particular, a closure part (30) associated with the third piece (27), where appropriate with the tubular part (24), having the function of opening or closing the passage formed by the annular end portion (26).

23. Method for mounting or assembling the first mounting piece (1) to and onto the second piece (2) of an assembly according to any one of claims 13 to 22, wherein:
o a first piece (1) and a second piece (2) which are not mounted or assembled together are provided, the holding chamber (45) of the first piece (1) being in the retracted state;
∘ the first piece (1) is positioned facing and in the axis of the second piece (2);
∘ the skirt is threaded (15) onto the collar (8), and the first piece (1) is positioned axially on the second piece (2);
∘ in this position, the holding chamber (45) of the first piece (1) is changed from the retracted state to the expanded state;
∘ such that, in this situation where the first piece (1), in the active state, is mounted or assembled onto the second piece (2), the mating portion (47a) of the inner face of the holding chamber (45) engages in a fluidtight clamping and retaining manner on the mating portion of the outer face (10b) of the collar (8) of the second piece (2).

24. Method for disassembling the first mounting piece (1) from the second piece (2) of an assembly according to any one of claims 13 to 22, wherein:
∘ a first piece (1) and a second piece (2) mounted or assembled together are provided, the holding chamber (45) of the first piece (1) being in the expanded state;
∘ the holding chamber (45) of the first piece (1) is transitioned from the expanded state to the retracted state;
∘ the first piece (1) is unthreaded from the second piece (2), until the two pieces (1, 2) are disassembled.

25. Method for implementing an assembly according to claim 20 as dependent on claims 15 to 18, wherein:
∘ a container for storage or processing (4) is provided;
∘ one begins from a situation in which:
• the pouch (5) of the container (4) is in the folded flat state,
• the end opening (3) of the port (2a) of the container (4) forming the second piece (2) is obscured by the first piece (1) arranged at the top and mounted on and assembled to the second piece (2), and
• the bottom of the pouch (5) is placed on the container bottom (19);
∘ an opening (22) for introducing product from the container (4) being open, a product is gradually introduced into the container (4) and simultaneously the pouch (5) is allowed to deploy upward and into its three-dimensional shape by the container (19), until the desired amount of product has been introduced into the container (4);
∘ the first piece (1) is disassembled from the second piece (2), which opens the end opening (3) of the second piece (2);
∘ said end opening (3) of the second piece (2) thus being opened, a product and/or a processing means and/or a means of measuring content in the pouch is introduced via this opening into the pouch (5), and, once this last step is completed,
∘ the first piece (1) is mounted or assembled to and onto the second piece (2).

26. Method according to claim 25, wherein the container (4) comprises integrated processing means (21) comprising mixing means arranged within the pouch (5), adjacent to its bottom (6), wherein:
∘ the end opening (3) of the port (2a) of the container (4) forming the second piece (2) being obscured by the first piece (1), and an opening (22) for introducing product from the container being open, the desired amount of product is introduced into the container (4);
∘ the first piece (1) is disassembled from the second piece (2) and thus the end opening (3) of the second piece (2) is opened;
∘ said end opening (3) of the second piece (2) thus being opened, a desired amount of product is introduced via said opening into the pouch (5);
∘ the mixing means (21) are put to use;
∘ the first piece (1) is mounted or assembled on and onto the second piece (2);
∘ and the mixing means (21) continue to be put to use.

27. Method for making use of an assembly according to claim 22 as dependent on claims 15 to 18, in the case where the third piece (27) is a pouch that is open opposite to its annular end portion (26) to allow introducing a product P into the container (4) via the third piece (open pouch 27), wherein:
∘ a container (4) for storage or processing is provided, comprising a pouch (5) and a third piece (open pouch 27) connected in a rigid and fluidtight manner to the first piece (1);
∘ a closure part (30) is connected to the end portion (26) of the third piece (open pouch 27) and this part is manipulated to close the passage formed by the annular end portion (26);
∘ as the third piece (open pouch 27) is open opposite to its thusly closed annular end portion (26), the desired amount of product P is introduced through here into the third piece (pouch 27);
∘ the opening of the third piece (pouch 27) opposite to its closed annular end portion (26) is closed;
∘ the first piece (1) is mounted or assembled to or onto the second piece (2), with no communication now existing between the pouch (5) of the container (4) for storage or processing and the third piece (pouch 27);
∘ when desired, the closure part (30) is manipulated to open the passage formed by the annular end portion (26), communication then being established between the pouch (5) of the container (4) for storage or processing and the third piece (pouch 27);
∘ the product introduced into the third piece (pouch 27) travels into the pouch (5) of the container for storage or processing (4).

28. Method for making use of an assembly according to claim 22 as dependent on claims 15 to 18, in the case where the third piece (27) is a pouch, closed opposite to its annular end portion (26), to allow introducing a product P into the container (4) via the third piece (closed pouch 27), wherein:
∘ a container (4) for storage or processing is provided, comprising a pouch (5) and a third piece (closed pouch 27) connected in a rigid and fluidtight manner to the first piece (1);
∘ as the third piece (pouch (27) is open at its annular end portion (26), the desired amount of product P is introduced through here into the third piece (pouch (27);
∘ a closure part (30) is connected to the end portion (26) of the third piece (pouch 27) and this part is manipulated to close the passage formed by the annular end portion (26),
∘ the first piece (1) is mounted or assembled to and onto the second piece (2), with no communication now existing between the pouch (5) of the container (4) for storage or processing and the third piece (pouch 27) containing the product P;
∘ when desired, the closure part (30) is manipulated to open the passage formed by the annular end portion (26), communication then being established between the pouch (5) of the container (4) for storage or processing and the third piece (pouch 27);
∘ the product P introduced into the third piece (pouch 27) travels into the pouch (5) of the container (4) for storage or processing.
